# EUROPEAN PATENT APPLICATION

(11) **EP 4 293 497 A1**
(43) Date of publication of application: **20.12.2023**
(21) Application number: 22758770.6
(22) Date of filing: 11.02.2022
(51) Int. Cl.: G06F 3/14

(54) **SCREEN PROJECTION DISPLAY METHOD AND ELECTRONIC DEVICE**

(30) Priority: 26.02.2021 CN 202110221257
(71) Applicant: Huawei Technologies Co., Ltd., Shenzhen, Guangdong 518129 (CN)
(72) Inventor: HE, Shujie, Shenzhen, Guangdong 518129 (CN); PAN, Hui, Shenzhen, Guangdong 518129 (CN)
(74) Representative: Huawei European IPR
(86) International application number: PCT/CN2022/076045
(87) International publication number: WO 2022/179405

(57) **Abstract**

This application discloses a projection display method and an electronic device. When a call is performed in a projection scenario, user privacy can be protected without affecting normal use of another projection application by a user on a target device. The method includes: A source end device may project a first display interface of a first application onto a first window of a target device for display. The source end device synchronously displays display content in the first window. The source end device projects a second display interface of a second application onto a second window of the target device for display. The source end device may continue to synchronously display the display content in the first window. In this scenario, if the source end device detects a call event, the source end device may detect whether an object approaches the source end device. If an object approaches the source end device, the source end device may stop displaying a call interface corresponding to the current call event, and trigger the target device to display a preset blocking picture in the first window. The blocking picture is used to block a part or all of the call interface.

## Description

This application claims priority to Chinese Patent Application No. 202110221257.X, filed with the China National Intellectual Property Administration on February 26, 2021 and entitled "PROJECTION DISPLAY METHOD AND ELECTRONIC DEVICE", which is incorporated herein by reference in its entirety.

### TECHNICAL FIELD

This application relates to the field of terminal technologies, and in particular, to a projection display method and an electronic device.

### BACKGROUND

Currently, an electronic device such as a mobile phone may enable a mistouch prevention function in a call scenario to prevent a mistouch from occurring after a human ear is close to a screen. For example, after detecting that a user is in a call with a contact, the mobile phone may detect, by using an optical proximity sensor, whether there is an object near an earpiece of the mobile phone. If it is detected that there is an object near the earpiece of the mobile phone, the mobile phone may automatically turn off the screen (or referred to as being screen-off), to prevent a mistouch from occurring after a human ear is close to the screen, and prevent user privacy on a call interface from being leaked.

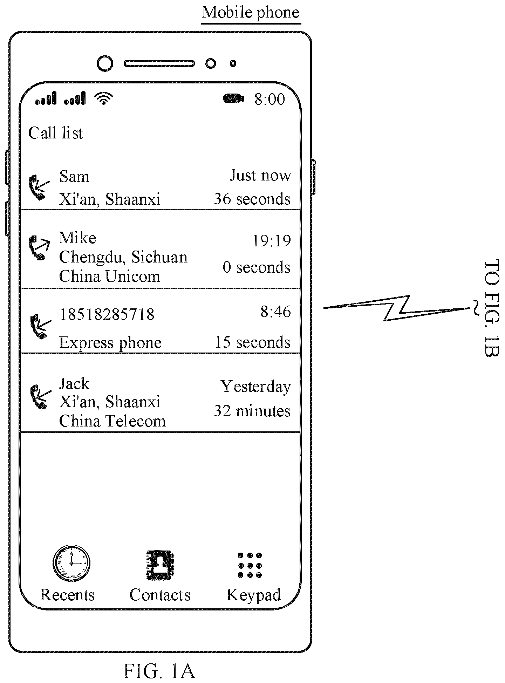

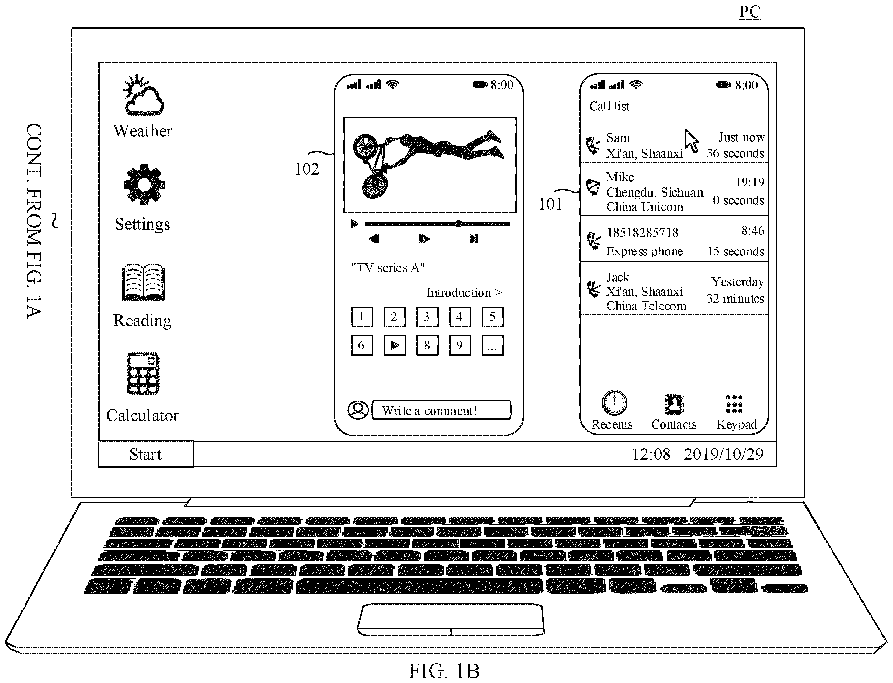

In some projection scenarios, a source end device (or referred to as a source end) such as a mobile phone may project a plurality of applications onto a target device (or referred to as a sink end) such as a PC in a form of a plurality of windows for display. For example, as shown in FIG. 1A and FIG. 1B, a mobile phone may project a display interface of a call app onto a window 101 on a PC for display, and the mobile phone may project a display interface of a video app onto a window 102 on the PC for display. In this case, display content of the mobile phone may be synchronized with display content in the window 101, that is, the display interface of the call app is also displayed on the mobile phone.

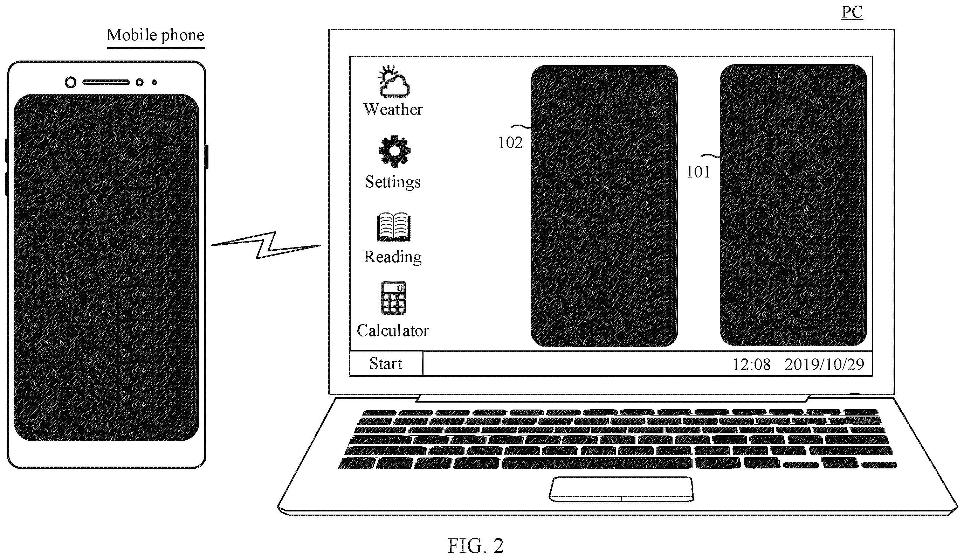

Herein, if the user makes a call with a contact A by using the mobile phone, the mobile phone triggers the foregoing mistouch prevention function to detect whether there is an object near an earpiece of the mobile phone. If it is detected that there is an object near the earpiece of the mobile phone, as shown in FIG. 2, the mobile phone may stop drawing the display interface on the screen of the mobile phone, and enter a screen-off state. The mobile phone stops drawing the display interface on the screen of the mobile phone. Therefore, the mobile phone cannot send a display interface of each application to the PC. In this case, the window 101 and the window 102 on the PC cannot normally display the display interfaces of the related applications, and the user cannot normally use related functions in the window 101 and the window 102. This reduces user experience in the projection scenario.

### SUMMARY

This application provides a projection display method and an electronic device. When a call is performed in a projection scenario, user privacy can be protected without affecting normal use of another projection application by a user on a target device, and user experience is improved.

According to a first aspect, this application provides a projection display method, including: A source end device may project a first display interface of a first application onto a first window of a target device for display. The source end device synchronously displays display content in the first window. Subsequently, the source end device may project a second display interface of a second application onto a second window of the target device for display. In this case, the source end device may continue to synchronously display the display content in the first window. In this scenario, if the source end device detects a call event, the source end device may detect whether an object approaches the source end device. If an object approaches the source end device, the source end device may stop displaying a call interface corresponding to the current call event, and trigger the target device to display a preset blocking picture in the first window. The blocking picture is used to block a part or all of the call interface.

That is, in a scenario in which the source end device projects a plurality of applications onto the target device in a form of a plurality of windows for display, display content of the source end device is synchronized with display content of a window (for example, the first window) on the target device. Therefore, when the source end device detects, in a call scenario, that an object approaches the source end device, not only the source end device can stop displaying the call interface, but also the target device can block the call interface in the first window by displaying the blocking picture. In this way, the target device does not leak, in the call scenario, user privacy on the call interface, and an application unrelated to the call event can be normally displayed on the target device to provide a related function for a user, so that user experience is improved.

The call interface may be an interface displayed by a call application during dialing, or may be an interface displayed by a call application in a call process.

In some embodiments, in the foregoing scenario, the source end device may stop displaying the call interface corresponding to the current call event by entering a screen-off state.

In some other embodiments, when the source end device detects that an object approaches the source end device, the call interface may not be displayed synchronously by the source end device and the first window of the target device. For example, the call application may be switched by the user to run in a background. In the call process, the source end device and the first window of the target device may synchronously display an interface of a third application. In this case, the source end device may stop displaying the interface of the third application (for example, turn off a screen), and trigger the target device to block the interface of the third application in the first window by using the blocking picture.

In a possible implementation, that the source end device triggers the target device to display a preset blocking picture in the first window includes: The source end device sends a notification event to the target device, where the notification event includes an identifier of the first window. In this way, after receiving the notification event, the target device can draw the blocking picture in the first window based on the identifier of the first window in the notification event. The blocking picture is located at an upper layer of the displayed call interface.

Alternatively, the source end device may stop sending the display content corresponding to the first window to the target device, so that the target device stops displaying the current call interface in the first window.

In a possible implementation, if an object approaches the source end device, the method further includes: The source end device may continue to send the second display interface to the target device, and trigger the target device to continue to display the second display interface in the second window. In this way, in a multi-application projection scenario, after the source end device detects the call event, the source end device can stop displaying the call interface on the source end device and in a window related to the call event on the target device, to avoid a mistouch and privacy leakage during a call. However, the source end device can continue to normally display, on the target device, a window unrelated to the call event, so that the current call event does not interfere with use of another projected application by the user on the target device, to improve user experience in the projection and call scenarios.

In a possible implementation, that a source end device projects a first display interface of a first application onto a first window of a target device for display includes: The source end device draws the first display interface of the first application on a first virtual screen; and the source end device outputs the first display interface on the first virtual screen to the target device and a display of the source end device. That the source end device projects a second display interface of a second application to a second window of the target device for display includes: The source end device draws the second display interface of the second application on a second virtual screen; and the source end device outputs the second display interface on the second virtual screen to the target device.

In a possible implementation, that a source end device projects a first display interface of a first application onto a first window of a target device for display includes: The source end device draws the first display interface of the first application in a first area of a first virtual screen; and the source end device outputs the first display interface in the first area to the target device and a display of the source end device. That the source end device projects a second display interface of a second application onto a second window of the target device for display includes: The source end device draws the second display interface of the second application in a second area of the first virtual screen; and the source end device outputs the second display interface in the second area to the target device.

In a possible implementation, the blocking picture may include prompt information, and the prompt information is used to prompt that the user is on a call. For example, the prompt information may be a text, a picture, an animation, or the like. In addition, a parameter such as a size, a position, or transparency of the blocking picture in the first window may be set by a person skilled in the art based on actual experience.

In a possible implementation, after the source end device triggers the target device to display the preset blocking picture in the first window, the method further includes: In response to an operation input by the user into the second window, the source end device receives operation information sent by the target device; the source end device updates the second display interface to a third display interface based on the operation information; and the source end device may send the third display interface to the target device, and trigger the target device to display the third display interface in the second window. That is, when the target device blocks the call interface in the first window by using the blocking picture, the target device may normally provide a related application function to the user in the second window. A projection process of the second application in the second window is not affected.

In a possible implementation, after the source end device triggers the target device to display the preset blocking picture in the first window, the method further includes: After the source end device detects that the call event ends or no object approaches the source end device, the source end device synchronously displays a fourth display interface with the first window of the target device, where the fourth display interface is the same as or different from the first display interface. For example, after the call event ends, the source end device may return to the first display interface before the call event is received. In this case, the first window of the target device also synchronously displays the first display interface. For another example, in the call process, if it is detected that no object approaches the source end device, the source end device may display the current call interface. In this case, the first window of the target device also synchronously displays the call interface.

In a possible implementation, that the source end device detects, after detecting a call event, whether an object approaches the source end device includes: The source end device detects, after detecting the call event, a distance between an obstacle and the source end device by using an optical proximity sensor; and when a distance between the obstacle and the source end device is less than a preset value, the source end device may determine that an object approaches the source end device; or when the distance between the obstacle and the source end device is greater than or equal to a preset value, the source end device may determine that no object approaches the source end device.

In a possible implementation, the call event includes an event of answering a call of a contact, or an event of making a call to a contact.

According to a second aspect, this application provides a projection display method, including: A source end device displays a first display interface of a first application, and sends the first display interface to a target device. The target device receives the first display interface, and displays the first display interface in a first window. When displaying the first display interface, the source end device may further send a second display interface of a second application to the target device. After receiving the second display interface, the target device may display the second display interface in a second window. In this case, the source end device separately projects a plurality of applications to a plurality of windows of the target device for display. Subsequently, after detecting a call event, the source end device may detect whether an object approaches the source end device. If an object approaches the source end device, the source end device stops displaying a call interface corresponding to the call event (for example, enters a screen-off state), and the source end device may send a notification event to the target device, where the notification event includes an identifier of the first window displayed synchronously with the source end device. In this case, in response to the foregoing notification event, the target device may display a preset blocking picture in the first window. The blocking picture is used to block a part or all of the call interface, to avoid leakage of user privacy during a call. However, a window unrelated to the call event on the target device can be normally displayed, so that the current call event does not interfere with the user's use of another application that is already projected on the target device, to improve user experience in projection and call scenarios.

In a possible implementation, after the target device receives the second display interface, and displays the second display interface in the second window, the method further includes: The target device receives a first operation input by the user into the second window; the target device sends first operation information corresponding to the first operation to the source end device, so that the source end device updates the second display interface to a third display interface based on the first operation information, and sends the third display interface to the target device; and then the target device displays the third display interface in the second window. That is, when the target device blocks the call interface in the first window by using the blocking picture, the target device may normally provide a related application function to the user in the second window. A projection process of the second application in the second window is not affected.

In a possible implementation, after target device receives the first display interface, and displays the first display interface in the first window, the method further includes: The target device receives a second operation input by the user into the first window, for example, an operation of opening the second application. Further, the target device may send, to the source end device, second operation information corresponding to the second operation. In this case, that the source end device sends, when displaying the first display interface, a second display interface of a second application to the target device includes: The source end device may run, when displaying the first display interface, the second application in a background based on the second operation information. Further, the source end device sends, to the target device, the second display interface obtained when the second application is run.

In a possible implementation, after the target device displays the preset blocking picture in the first window, the method further includes: After the source end device detects that the call event ends or no object approaches the source end device, the source end device displays a fourth display interface. The source end device sends the fourth display interface and a recovery event to the target device, where the recovery event includes the identifier of the first window. In response to the recovery event, the target device stops displaying the blocking picture in the first window, and displays the fourth display interface.

In a possible implementation, when the source end device stops displaying the call interface corresponding to the call event, the source end device may enter a screen-off state.

According to a third aspect, this application provides an electronic device. The electronic device is a source end device, and the source end device includes a memory, a display, and one or more processors. The memory and the display are coupled to the processor. The memory is configured to store computer program code, and the computer program code includes computer instructions. When the electronic device runs, the processor is configured to execute one or more computer instructions stored in the memory, so that the electronic device is enabled to perform the projection display method according to any one of the first aspect or the second aspect.

According to a fourth aspect, this application provides an electronic device. The electronic device is a target device, and the target device includes a memory, a display, and one or more processors. The memory and the display screen are coupled to the processor. The memory is configured to store computer program code, and the computer program code includes computer instructions. When the electronic device runs, the processor is configured to execute one or more computer instructions stored in the memory, so that the electronic device is enabled to perform the projection display method according to any one of the first aspect or the second aspect.

According to a fifth aspect, this application provides a projection display system, including the source end device and the target device. The source end device and the target device may perform, through interaction, the projection display method according to any one of the first aspect or the second aspect.

According to a sixth aspect, this application provides a computer-readable storage medium. The computer-readable storage medium includes computer instructions. When the computer instructions are run on an electronic device, the electronic device is enabled to perform the projection display method according to any one of the first aspect or the second aspect.

According to a seventh aspect, this application provides a computer program product. When the computer program product runs on an electronic device, the electronic device is enabled to perform the projection display method according to any one of the first aspect or the second aspect.

It can be understood that the electronic device, the computer-readable storage medium, and the computer program product provided in the foregoing aspects are all applied to the corresponding methods provided above. Therefore, for beneficial effects that can be achieved by the electronic device, the computer-readable storage medium, and the computer program product, refer to the beneficial effects in the corresponding methods provided above. Details are not described herein again.

### BRIEF DESCRIPTION OF DRAWINGS

FIG. 1A and FIG. 1B are a diagram 1 of an application scenario of a projection display method in the conventional technology;
FIG. 2 is a diagram 2 of an application scenario of a projection display method in the conventional technology;
FIG. 3A and FIG. 3B are a diagram 1 of an application scenario of a projection display method according to an embodiment of this application;
FIG. 4A and FIG. 4B are a diagram 2 of an application scenario of a projection display method according to an embodiment of this application;
FIG. 5 is a diagram 3 of an application scenario of a projection display method in the conventional technology;
FIG. 6 is a schematic diagram 1 of a structure of an electronic device according to an embodiment of this application;
FIG. 7 is a schematic diagram of an architecture of an operating system of an electronic device according to an embodiment of this application;
FIG. 8A and FIG. 8B are a schematic diagram 1 of a principle of a projection display method according to an embodiment of this application;
FIG. 9A and FIG. 9B are a schematic diagram 2 of a principle of a projection display method according to an embodiment of this application;
FIG. 10A and FIG. 10B are a schematic diagram 3 of a principle of a projection display method according to an embodiment of this application;
FIG. 11A and FIG. 11B are a schematic diagram 4 of a principle of a projection display method according to an embodiment of this application;
FIG. 12A and FIG. 12B are a schematic diagram 5 of a principle of a projection display method according to an embodiment of this application;
FIG. 13A and FIG. 13B are an interaction flowchart of a projection display method according to an embodiment of this application;
FIG. 14A and FIG. 14B are a diagram 3 of an application scenario of a projection display method according to an embodiment of this application;
FIG. 15A and FIG. 15B are a diagram 4 of an application scenario of a projection display method according to an embodiment of this application;
FIG. 16A and FIG. 16B are a diagram 5 of an application scenario of a projection display method according to an embodiment of this application;
FIG. 17 is a diagram 6 of an application scenario of a projection display method according to an embodiment of this application;
FIG. 18A and FIG. 18B are a diagram 7 of an application scenario of a projection display method according to an embodiment of this application;
FIG. 19A and FIG. 19B are a diagram 8 of an application scenario of a projection display method according to an embodiment of this application;
FIG. 20 is a schematic diagram 2 of a structure of an electronic device according to an embodiment of this application; and
FIG. 21 is a schematic diagram 3 of a structure of an electronic device according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, "a plurality of" means two or more unless otherwise specified.

Currently, multi-device collaboration is a common way of office and entertainment. When multi-device collaboration is performed, a source end device (or referred to as a source end) may establish a connection with a target device (or referred to as a sink end). For example, the source end device may establish a Wi-Fi connection, a Bluetooth connection, or a P2P (peer to peer, peer-to-peer) connection with the target device. Further, the source end device may project, by using a MiraCast protocol or a DLNA (DIGITAL LIVING NETWORK ALLIANCE, digital living network alliance) protocol, an image, a document, an audio, a video, or an application in the source end device to the target device for display or play, so that a user can use, on the target device, a related function provided by the source end device.

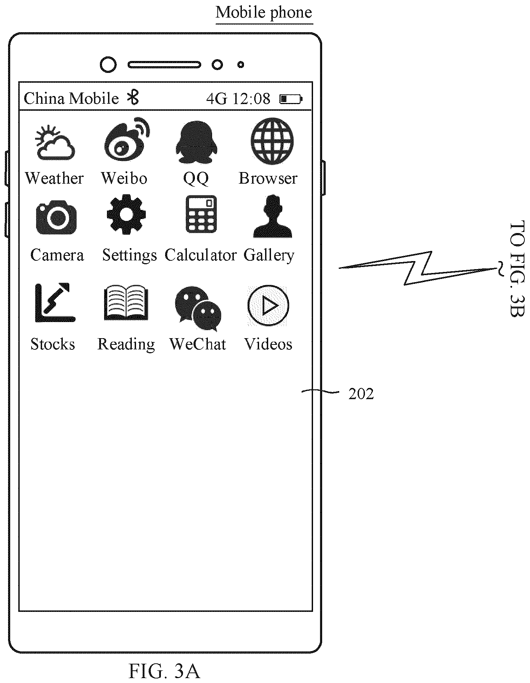

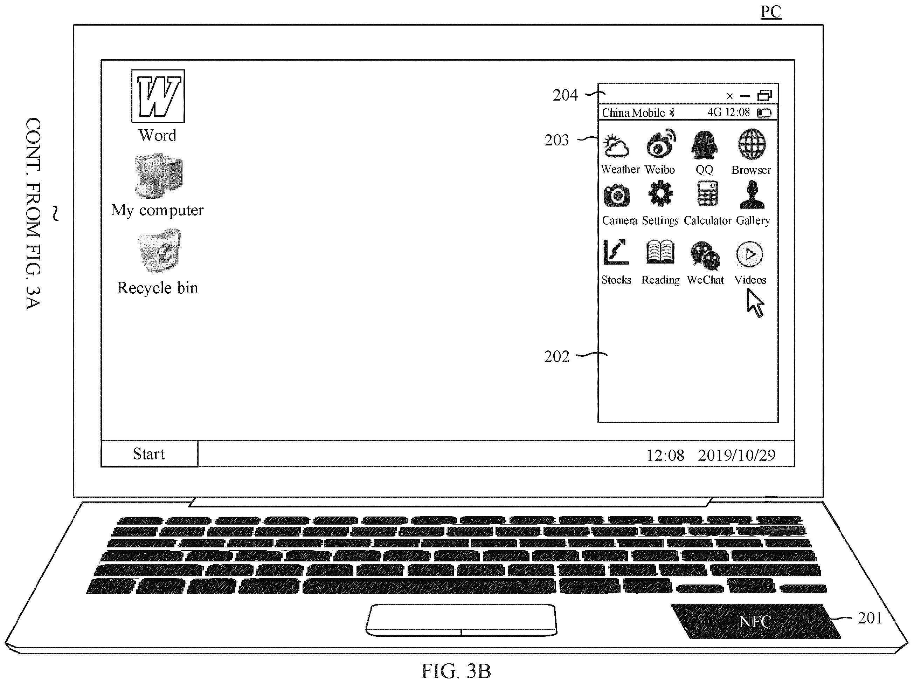

For example, a mobile phone is used as the source end device and a PC is used as the target device. As shown in FIG. 3A and FIG. 3B, an electronic label 201 may be disposed on the PC, and the electronic label 201 may also be referred to as an NFC (near field communication, near field communication) label, an NFC patch, or the like. A coil is generally disposed in the electronic label 201, and device information of the PC may be written into the coil of the electronic label 201 in advance when the PC is delivered from a factory. For example, the device information may include one or more of a name, a Bluetooth MAC (media access control, media access control) address, or an IP address of the PC.

When the user needs to project data such as an application or a document on the mobile phone onto the PC for display, the user may enable an NFC function of the mobile phone, and then place the mobile phone close to or contact the mobile phone with the electronic label 201 on the PC. In this way, when the mobile phone and the electronic label 201 are close to each other, the mobile phone may read the device information of the PC from the electronic label 201 by transmitting a near-field signal. Further, the mobile phone may establish a wireless communication connection to the PC based on the device information of the PC. For example, the wireless communication connection may be specifically a Bluetooth connection, a Wi-Fi connection, a Wi-Fi P2P connection, or the like. This is not limited in embodiments of this application.

Certainly, in addition to triggering the mobile phone to establish a connection to the PC in the foregoing "OneHop" manner, the mobile phone may also trigger the mobile phone to establish a connection to the PC by searching for a nearby device, or by using a gesture such as dragging. Alternatively, the mobile phone may establish a connection to the PC by using a UWB (Ultra Wide Band, ultra-wideband), or another communication technology. This is not limited in embodiments of this application.

After the mobile phone establishes the wireless communication connection to the PC, as shown in FIG. 3A and FIG. 3B, the mobile phone may send a current display interface 202 to the PC in real time by using the established wireless communication connection. For example, the mobile phone may transmit the current display interface 202 to the PC in real time in a form of a video stream. The PC may display the display interface 202 by using a window 203. The window 203 may include a control bar 204, and the control bar 204 may include buttons such as maximize, minimize, and close. For example, the display interface 202 is a home screen of the mobile phone. After the PC displays the home screen of the mobile phone in the window 203, the user may use, in the window 203, various functions provided by the mobile phone.

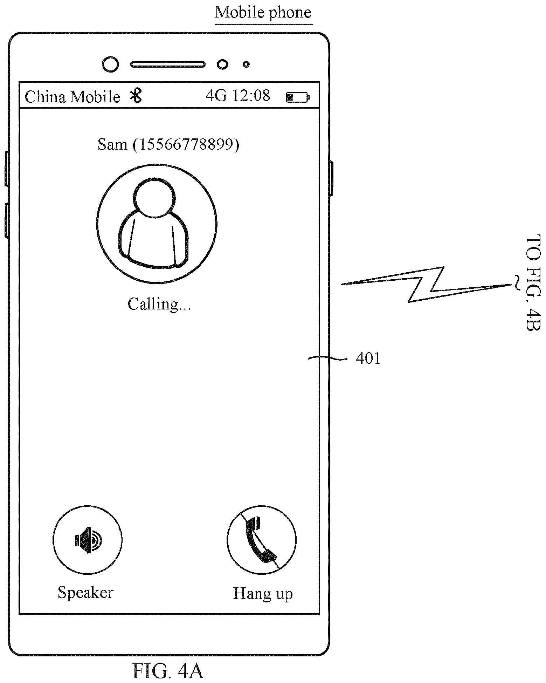

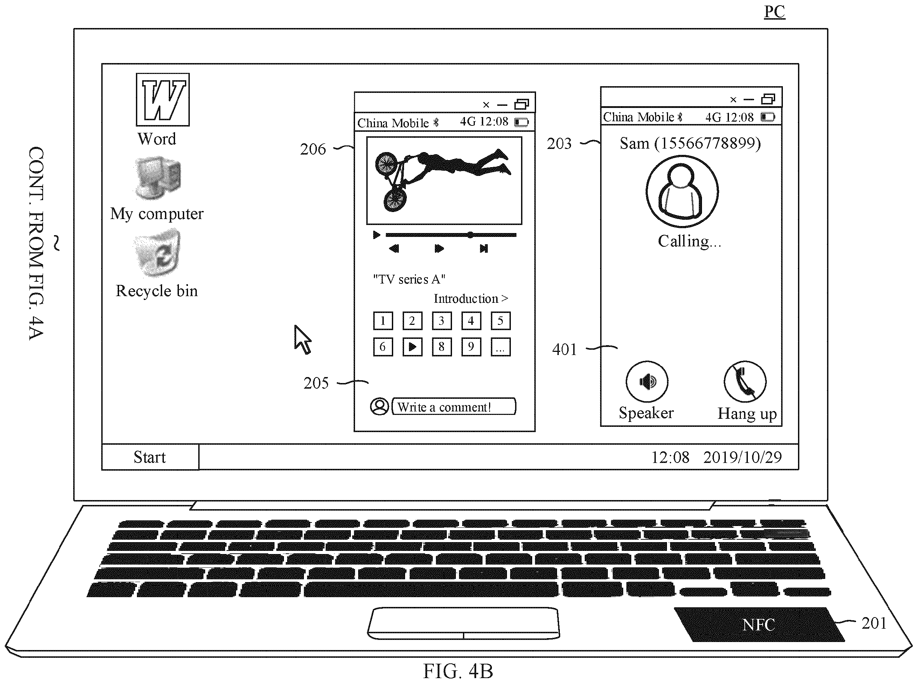

For example, the user may input, into the window 203 by using a keyboard or a mouse of the PC, an operation of opening the video app. Further, the PC may send the operation input by the user to the mobile phone, and trigger the mobile phone to project the video app onto the PC in response to the operation. For example, the mobile phone may run the video app in a background. As shown in FIG. 4A and FIG. 4B, the mobile phone may send, to the PC in a form of a video stream, display data (that is, a display interface 205 of the video app) generated when the video app is run. The PC may create a new window 206, and display the display interface 205 of the video app in the window 206. In this case, the PC may not only display, by using the window 203, a desktop application that is running in a foreground of the mobile phone, but also display, by using the window 206, the video app that is running in the background of the mobile phone. In this way, the mobile phone (that is, the source end device) may project a plurality of applications onto the PC (that is, the target device) for display in a form of a plurality of windows.

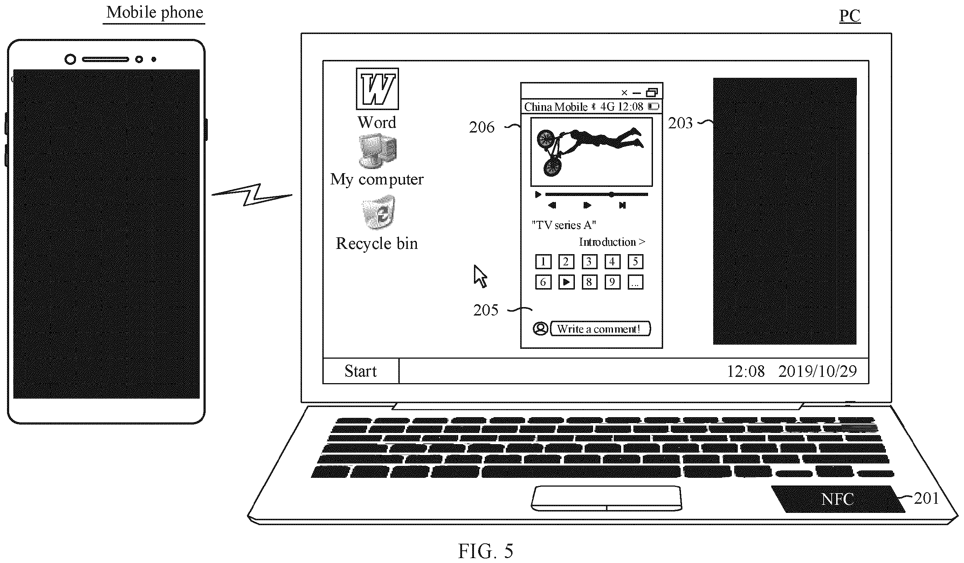

Still as shown in FIG. 4A and FIG. 4B, display content in the window 203 on the PC is synchronized with display content on the mobile phone. As shown in FIG. 5, if the user makes a call to a contact Sam by using a call app of the mobile phone, the mobile phone may display a call interface 401. In addition, the mobile phone may send the call interface 401 to the PC, and the PC updates the call interface 401 to display in the window 203. In addition, the mobile phone detects that the user makes a call to the contact Sam, or after the user connects the call with the contact Sam, the mobile phone may further detect, by using an optical proximity sensor, whether there is an object near an earpiece of the mobile phone. If it is detected that there is an object near the earpiece of the mobile phone, the mobile phone stops drawing the call interface 401, and the mobile phone enters a screen-off state. In this case, the mobile phone further stops sending the display data to the PC, so that the PC cannot display a display interface of a related application in the window 203 and the window 206, and the user cannot normally use a related function in the window 203 and the window 206 on the PC.

Alternatively, after stopping drawing the call interface 401, the mobile phone may further indicate the PC to display a preset mask layer, an animation, a text, or a picture in the window 203 and the window 206, to prompt the user that the mobile phone is in a call. Similarly, in this case, the user cannot normally use the related function in the window 203 and the window 206 on the PC.

In view of this, an embodiment of this application provides a projection display method. An example in which a mobile phone is still used as a source end device is still used. When the mobile phone detects a call event on the mobile phone, if the mobile phone is projecting windows of a plurality of applications onto a target device, when the mobile phone detects an object near an earpiece of the mobile phone, the mobile phone may control the target device to continue to normally display a display interface in another window except a call interface. For example, in the scenario shown in FIG. 5, the mobile phone may control the PC to stop displaying the display interface in the window 203, but continue to display the display interface of the video app in the window 206. In this way, when a plurality of applications of the mobile phone are projected onto the target device, an application unrelated to the current call event may be normally displayed on the target device to provide a related function for the user. Use of the application unrelated to the current call event by the user on the target device is not affected, so that user experience in the projection and call scenarios is improved.

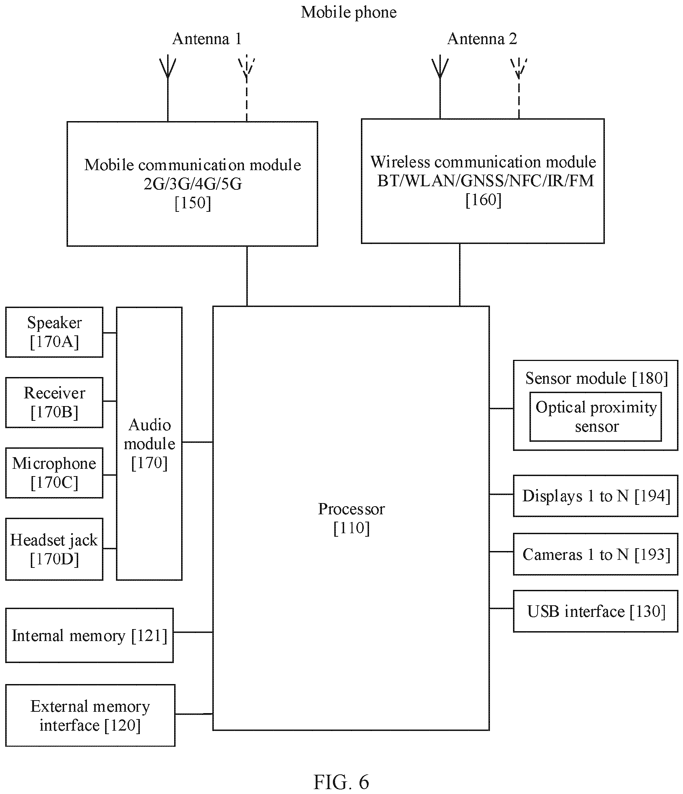

An example in which a mobile phone is still used as a source end device in the foregoing projection scenario is still used. FIG. 6 is a schematic diagram of a structure of a mobile phone.

As shown in FIG. 6, the mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that an illustrated structure in this embodiment of the present invention does not constitute a specific limitation on the mobile phone. In other embodiments of this application, the mobile phone may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the mobile phone may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The wireless communication module 160 may provide a solution to wireless communication applied to the mobile phone, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the mobile phone may include one or N displays 194, where N is a positive integer greater than 1.

An OLED display is used as an example. One OLED display may include a plurality of OLED pixel units arranged in an array. Each OLED pixel unit includes a cathode, an anode, and an electron transport layer, a hole transport layer, and a light emitting layer located between the cathode and the anode. The cathode may be a metal electrode, and the anode may be an ITO (indium tin oxide, indium tin oxide) transparent electrode.

After a driving voltage V is input into the cathode and the anode, under an action of the driving voltage V, electrons are transferred from the cathode to the electron transport layer, and holes are injected from the anode to the hole transport layer. Excitons are generated after the electrons and the holes meet in the light emitting layer, so that light emitting molecules in the light emitting layer are excited. After radiation, a light source is generated. When the driving voltage V is different, corresponding OLED pixel units may be excited to present different colors and luminance. In this way, each OLED pixel unit in the OLED display may display corresponding pictures under different driving voltages.

Organic materials in the electron transport layer, the hole transport layer, and the light emitting layer are gradually aged in a use process. In addition, a residual shadow phenomenon in the OLED display occurs because that an OLED pixel unit at a fixed location always displays a same and still image for a long time, organic materials in the pixel cell at this location is more depleted than at other locations, and luminous efficiency decays faster, leaving a residual shadow on the OLED display.

The mobile phone may implement a photographing function by using the ISP, a camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The digital signal processor is configured to process a digital signal, and may process another digital signal in addition to the digital image signal. For example, when the mobile phone selects a frequency, the digital signal processor is configured to perform Fourier transform on frequency energy.

The video codec is configured to compress or decompress a digital video. The mobile phone may support one or more video codecs. In this way, the mobile phone may play or record videos in a plurality of coding formats, for example, moving picture experts group (moving picture experts group, MPEG)-1, MPEG-2, MPEG-3, and MPEG-4.

The external memory interface 120 may be configured to connect to an external memory card, for example, a micro SD card, to extend a storage capability of the mobile phone. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the mobile phone and data processing. The internal memory 121 may include a program storage area and a data storage area. The program storage area may store an operating system, an application required by at least one function (for example, a voice playing function or an image playing function), and the like. The data storage area may store data (such as audio data and an address book) and the like created during use of the mobile phone. In addition, the internal memory 121 may include a highspeed random access memory, or may include a nonvolatile memory, for example, at least one magnetic disk storage device, a flash memory, or a universal flash storage (universal flash storage, UFS).

The mobile phone may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The mobile phone may listen to music or answer a hands-free call by using the speaker 170A.

The receiver 170B, also referred to as an "earpiece", is configured to convert an electrical audio signal into a sound signal. When the mobile phone answers a call or receives a voice message, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through a mouth of the user, to input a sound signal into the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the mobile phone may further include a charging management module, a power management module, a battery, a button, an indicator, one or more SIM card interfaces, and the like. This is not limited in embodiments of this application.

A software system of the mobile phone may use a layered architecture, an event-driven architecture, a microkernel architecture, a micro service architecture, or a cloud architecture. In this embodiment of this application, an Android° system of a layered architecture is used as an example to describe the software structure of the mobile phone.

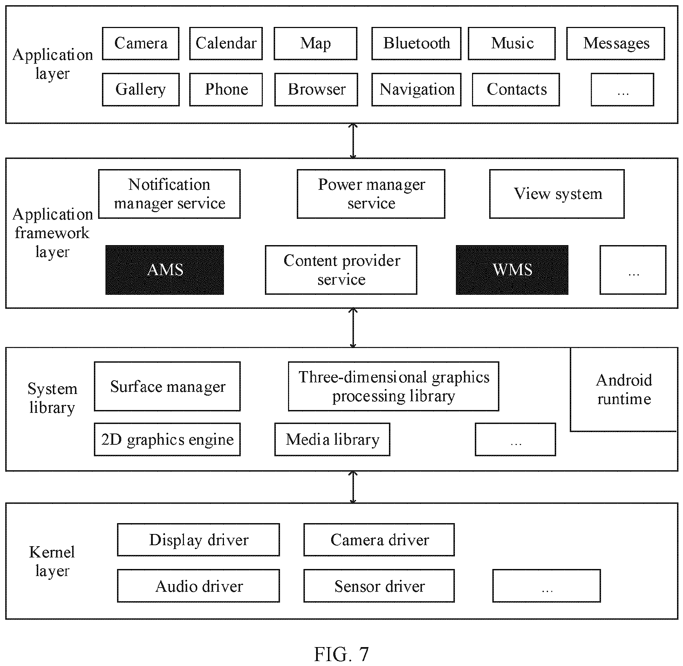

FIG. 7 is a block diagram of a software structure of a mobile phone according to an embodiment of this application.

In a layered architecture, software is divided into several layers, and each layer has a clear role and task. The layers communicate with each other through a software interface. In some embodiments, the Android° system is divided into four layers: an application layer, an application framework layer, an Android runtime (Android runtime) and system library, and a kernel layer from top to bottom.

### 1. Application layer

The application layer may include a series of application packages.

As shown in FIG. 7, apps (application, application) such as Phone, Memo, Browser, Contacts, Camera, Gallery, Calendar, Map, Bluetooth, Music, Videos, and Messages may be installed at the application layer.

### 2. Application framework layer

The application framework layer provides an application programming interface (application programming interface, API) and a programming framework for an application at the application layer. The application framework layer includes some predefined functions.

In this embodiment of this application, as shown in FIG. 7, the application framework layer may include an activity manager service (Activity Manager Service, AMS) and a window manager service (Window Manager Service, WMS).

The AMS may be configured to manage a life cycle of an application during running. The application usually runs in an operating system in a form of an activity. For each activity, there is a corresponding activity record (Activity Record) in the activity manager, and the activity record records a status of the activity of the application. The activity manager may use the activity record as an identifier to schedule an activity process of the application.

The WMS is configured to manage a graphical user interface (graphical user interface, GUI) resource used on a mobile phone screen. The management may specifically include window creation and deletion, window display and hiding, window layout, focus management, input method and wallpaper management, and the like.

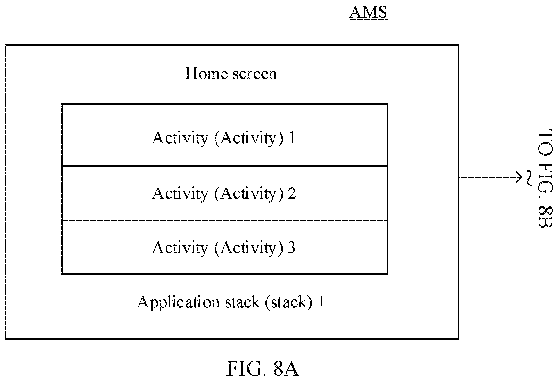

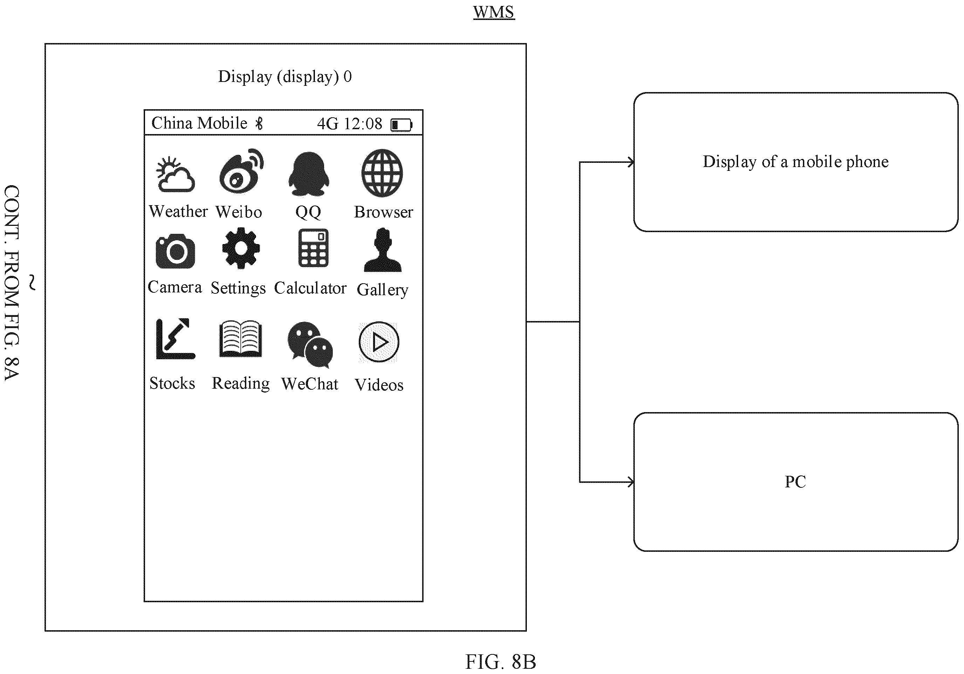

In this embodiment of this application, for example, a mobile phone runs a home screen (which may also be referred to as a home screen application, a launcher, or the like). After the mobile phone starts to run the home screen, as shown in FIG. 8A and FIG. 8B, the AMS may create a corresponding application stack (stack) for the home screen, for example, a stack 1. The stack 1 may include one or more activities that need to be executed by the home screen. When executing the activity in stack 1, the WMS may draw a corresponding display interface in real time in a default display module (for example, a display 0) of the mobile phone. Further, the WMS may output the display interface drawn in the display 0 to a display of the mobile phone for display, to present the home screen to the user on a screen of the mobile phone. The display module may also be referred to as a virtual screen, a virtual display, or the like. The mobile phone can use the display module as a canvas that occupies some storage space. For example, the display 0 may occupy storage space 1, an area 1 in the display 0 corresponds to a storage address segment in the storage space 1, and an area 2 in the display 0 corresponds to another storage address segment in the storage space 1. In other words, the display module may have a location attribute.

If the mobile phone establishes a connection to a target device (such as a PC) by enabling a projection function, as shown in FIG. 8A and FIG. 8B, the WMS may further output the display interface drawn in display 0 to the PC, so that the PC may create a corresponding window to present the home screen of the mobile phone, to implement a projection function in a multi-device collaboration scenario.

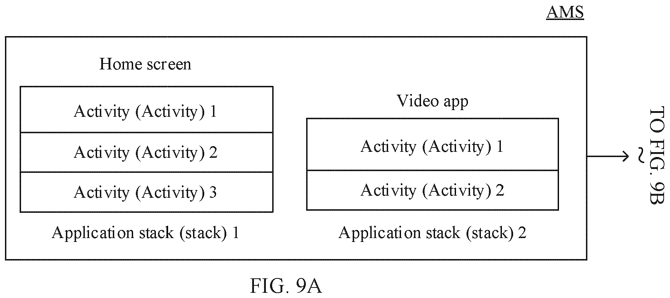

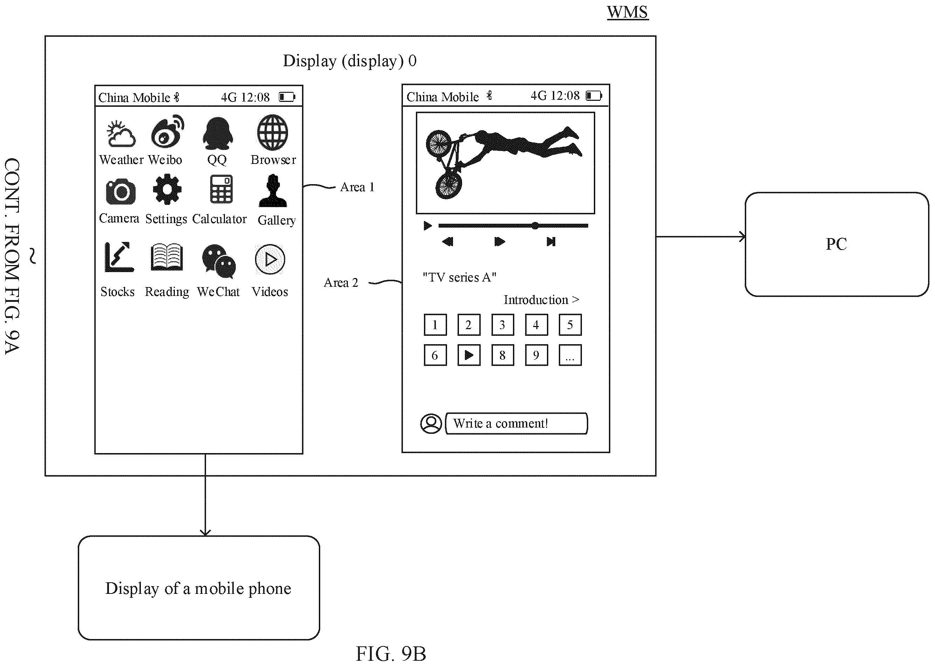

In this projection scenario, if it is detected that the user operates the PC to open an application (for example, a video app) on the home screen of the mobile phone, the PC may send a corresponding projection instruction to the mobile phone, to indicate the mobile phone to project the video app onto the PC for display. In this case, as shown in FIG. 9A and FIG. 9B, the AMS may create a corresponding stack 2 for the video app. The stack 2 may include one or more activities that need to be executed by the video app. In this case, because the user does not open the video app on the mobile phone, the AMS of the mobile phone may run the video app in a background of the mobile phone, and does not display a display interface of the video app.

Still as shown in FIG. 9A and FIG. 9B, after creating the stack 2, the AMS needs to execute activities in the stack 2 and the stack 1 concurrently. In this case, the WMS may draw the display interface of the video app and the display interface of the home screen in real time in the default display module (for example, the display 0) of the mobile phone. In this case, the area 1 of the display 0 includes the display interface of the home screen, and the area 2 of the display 0 includes the display interface of the video app. After the WMS sends display data in the display 0 to the PC, the PC may display the display interface of the home screen in the area 1 in the window 1, and display the display interface of the video app in the area 2 in the window 2. In this way, a plurality of applications on the mobile phone may be projected onto the PC for display in a form of a plurality of windows.

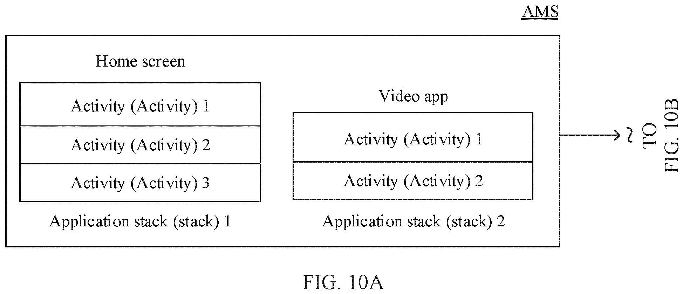

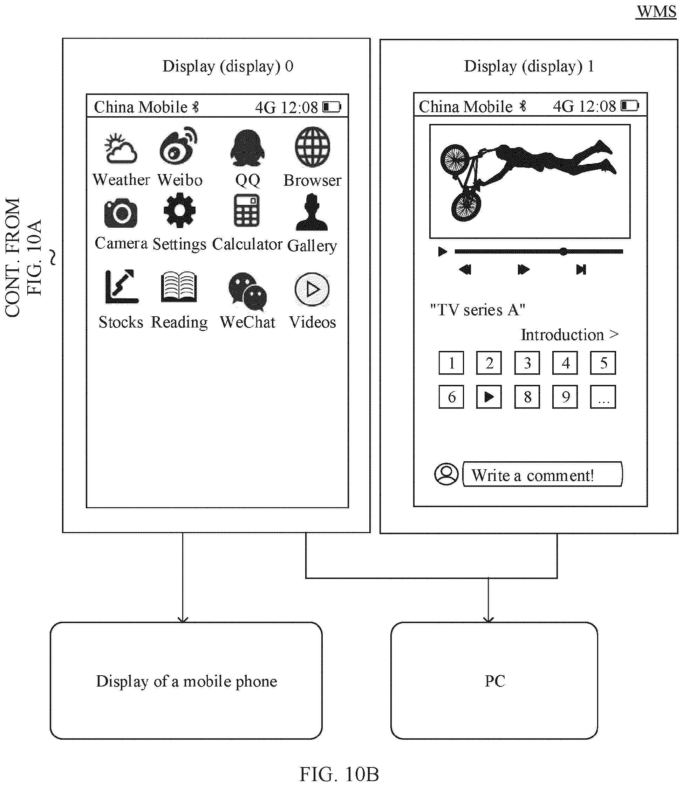

Alternatively, as shown in FIG. 10A and FIG. 10B, after the AMS creates the stack 2, the WMS may further create a corresponding display module (for example, a display 1) for the stack 2. Further, the WMS may draw the display interface of the video app in real time in the display 1. At the same time, the WMS can continue to draw the display interface of the home screen in real time in the display 0. Further, the WMS may send display data in the display 0 and the display 1 to the PC, and the PC may display the display interface of the home screen in the display 0 in the window 1, and display the display interface of the video app in the display 1 in the window 2. In this way, a plurality of applications on the mobile phone are projected onto the PC for display.

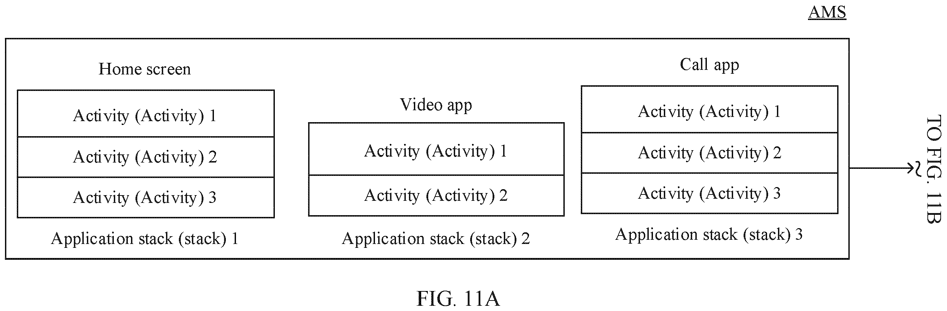

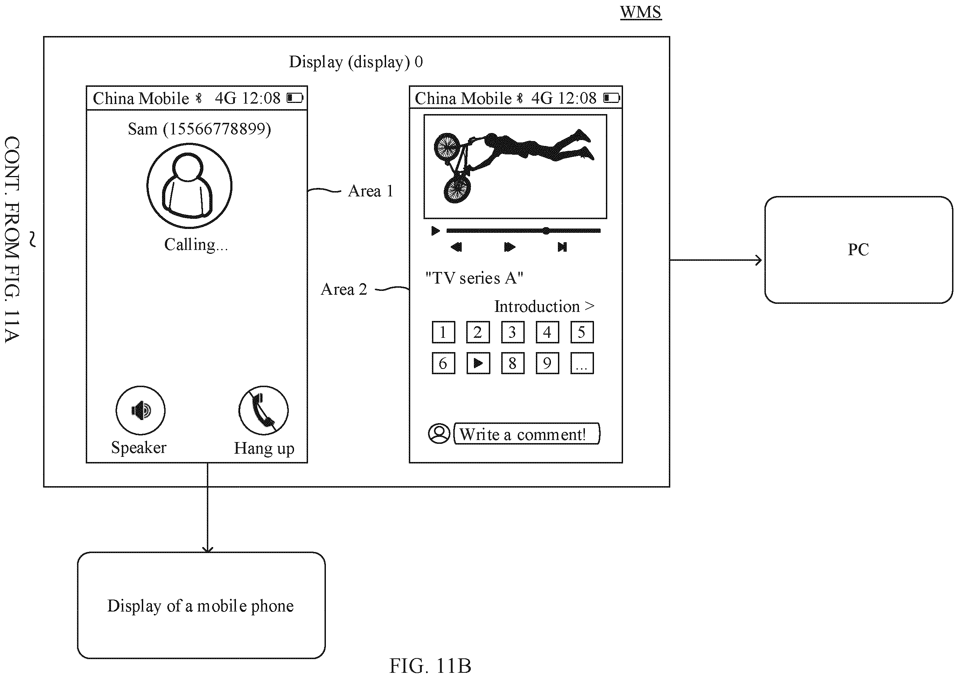

No matter which manner is used to project the plurality of applications on the mobile phone onto the PC for display, a display interface in a window on the PC is synchronized with a display interface of the mobile phone. Subsequently, the mobile phone may detect a call event reported by a call app. The call event may include an event of answering a call of a contact or making a call to a contact. In this case, as shown in FIG. 11A and FIG. 11B, in addition to creating a corresponding stack 3 for the call app, the AMS of the mobile phone may further invoke the WMS to draw a display interface of the call app in the area 1 in which the home screen is originally drawn in the display 0, and output the display interface of the call app to the mobile phone and the PC in real time for display.

In addition, after detecting the call event reported by the call app, the mobile phone may further detect, by using an optical proximity sensor disposed near an earpiece of the mobile phone, whether an object approaches the earpiece of the mobile phone. If it is detected that an object approaches the earpiece of the mobile phone, it indicates that a human ear is close to the earpiece of the mobile phone to answer a call, and the mobile phone may query an area that is in the display module and that is used to draw the display interface of the call app.

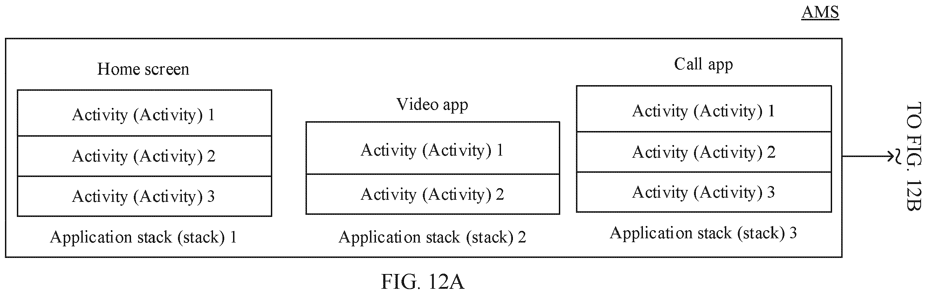

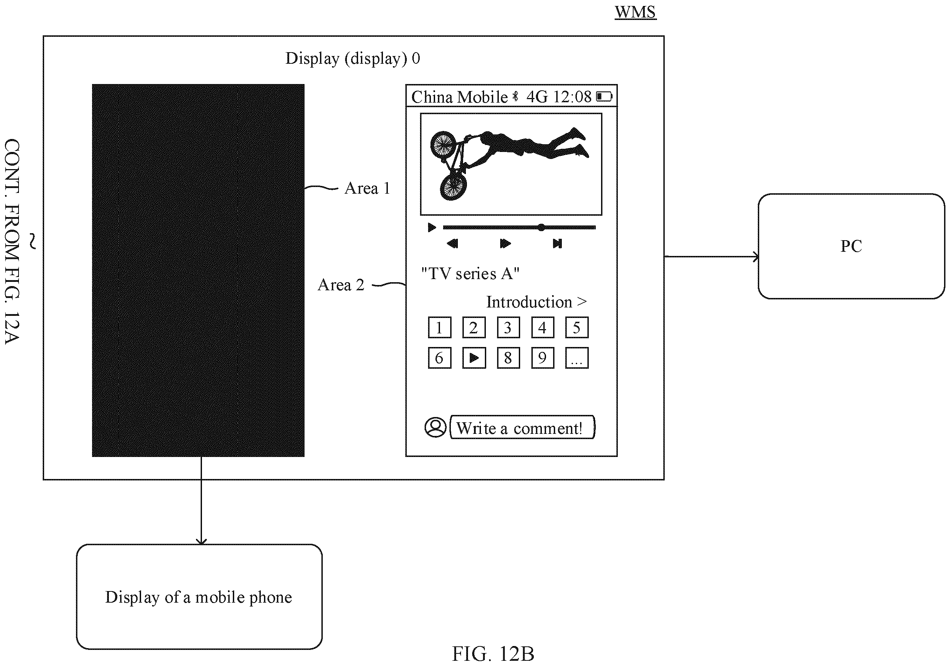

For example, a stack created when each application is running corresponds to an identifier, for example, a task ID. The mobile phone may obtain, from the AMS, the stack 3 corresponding to the current call app. Further, the mobile phone may query, in the WMS based on a task ID of the stack 3, that the display interface of the call app is drawn in the area 1 of the display 0. Further, as shown in FIG. 12A and FIG. 12B, the mobile phone may indicate the WMS to stop drawing a related display interface in the area 1, so that the area 1 is in a black-screen state. At the same time, the WMS may continue to draw the display interface of the running video app in the display 0 (or the display 1). In other words, a display interface of a non-call app may be normally rendered. In this way, no content in the area 1 of the display 0 is output to the mobile phone and the PC, so that the mobile phone and the PC can stop displaying the call interface during the call. This prevents the user from accidentally touching the screen of the mobile phone when answering a call, and prevents user privacy in the call interface from being leaked by using the mobile phone and the PC. In addition, the display interface of the video app in the display 0 (or the display 1) can be normally output to the PC, so that an application unrelated to the current call event can be normally displayed to provide a related function to the user, to improve user experience in projection and call scenarios.

A specific display process of the mobile phone (the source end device) and the PC (the target device) during multi-application projection is described in detail in a subsequent embodiment, and details are not described herein again.

In addition, the application framework layer may further include a power manager service, a content provider service, a view system, a resource manager service, a notification manager service, and the like. This is not limited in embodiments of this application.

### 3. Android runtime and system library

The Android runtime includes a kernel library and a virtual machine. The Android runtime is responsible for scheduling and management of the Android system.

The kernel library includes two parts: a performance function that needs to be invoked in java language, and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications. A media library supports playback and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, a sensor driver, and the like. This is not limited in embodiments of this application.

A projection display method provided in an embodiment of this application is described in detail below with reference to the accompanying drawings by still using an example in which a mobile phone is a source end device and a PC is a target device in a projection scenario.

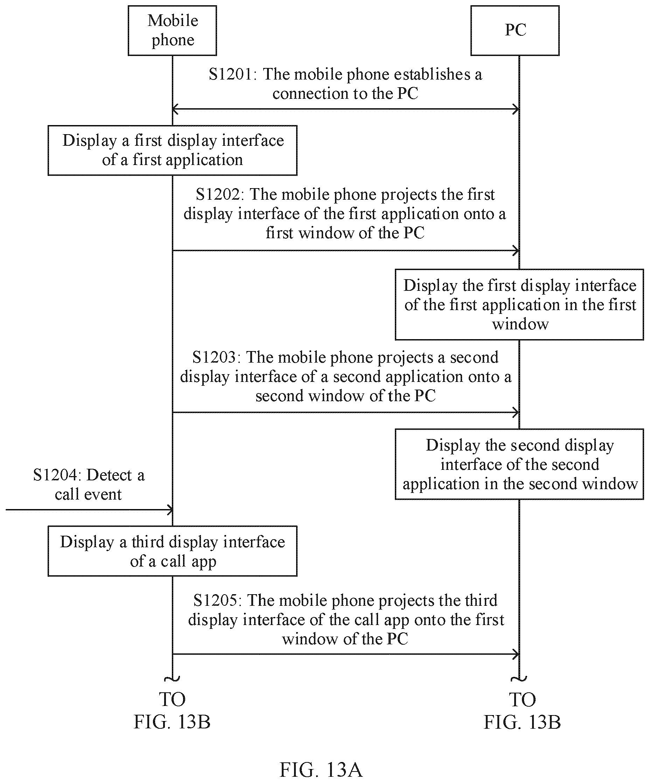

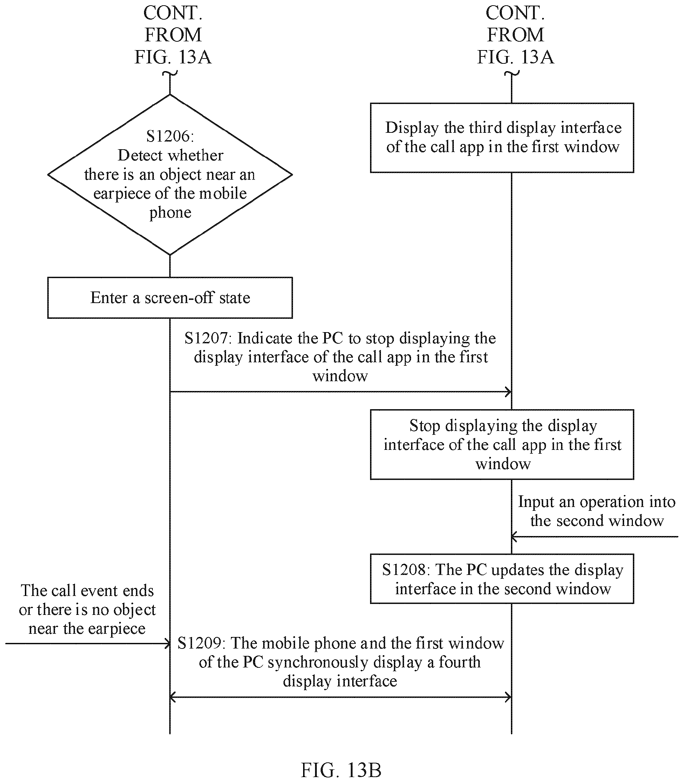

As shown in FIG. 13A and FIG. 13B, the projection display method provided in this embodiment of this application may include the following steps S1201 to S1209.

S1201: The mobile phone establishes a connection to the PC.

In some embodiments, the mobile phone may establish the connection to the PC in a wired manner. For example, the mobile phone may establish a wired connection to the PC through a data cable.

In some other embodiments, the mobile phone may establish the connection to the PC in a wireless manner.

For example, a user may touch, by using the mobile phone, an electronic label set on the PC, and the mobile phone reads device information stored in the electronic label. For example, the device information may include an IP address of the PC, and a Bluetooth MAC address. Then, the mobile phone may establish, based on the device information of the PC, the connection to the PC by using an NFC protocol.

For another example, a Bluetooth function and a Wi-Fi function are enabled on both the mobile phone and the PC. The PC may broadcast a Bluetooth signal to discover a surrounding terminal. For example, the PC may display a list of a discovered device, and the list of the discovered device may include an identifier of the mobile phone discovered by the PC. In addition, in a device discovery process, the PC may also exchange connection information, such as an IP address, with the discovered device. Then, after receiving an operation of selecting, by the user, the identifier of the mobile phone from the displayed device list, the PC may establish, based on the IP address of the mobile phone, the connection to the mobile phone by using a Wi-Fi protocol.

For still another example, both the mobile phone and the PC are connected to a cellular network, and the mobile phone and the PC log in to a same account (for example, a Huawei account). In this case, the mobile phone may establish the connection to the PC through the cellular network based on the Huawei account.

After the mobile phone successfully establishes the connection to the PC, the mobile phone and the PC may be collaboratively used. To improve collaboration usage efficiency, the user may use an input device, for example, a mouse of the PC, to control both the PC and the mobile phone. Certainly, the user may alternatively control the PC by using a mouse of the PC, and the user may control the mobile phone in a touch manner. This is not limited in embodiments of this application.

S1202: The mobile phone projects a first display interface of a first application onto a first window on the PC for display, and the mobile phone synchronously displays the first display interface in the first window.

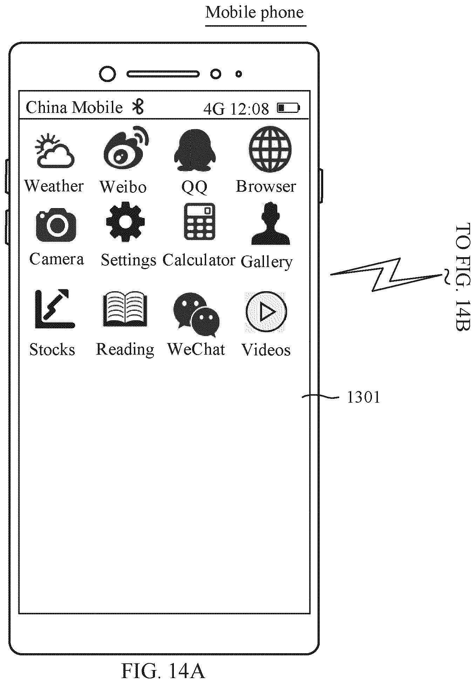

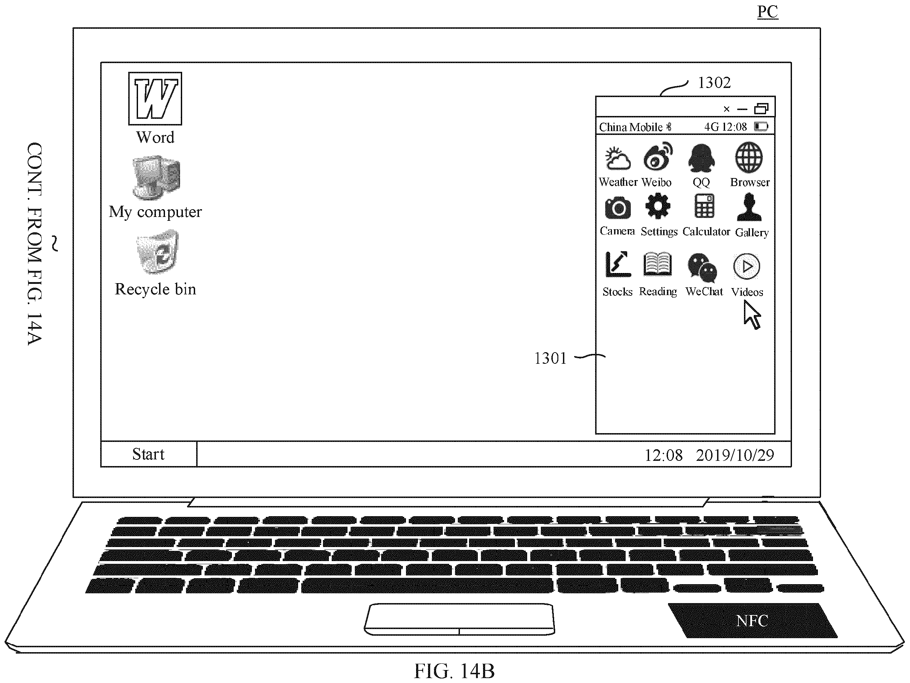

After the mobile phone establishes the connection to the PC, in some embodiments, the mobile phone may automatically project, onto the PC for display, a display interface (namely, the first display interface) that is of the first application and that is being displayed. For example, as shown in FIG. 14A and FIG. 14B after the mobile phone establishes the connection to the PC, the mobile phone is running a home screen. In this case, a WMS of the mobile phone may draw a display interface 1301 of the home screen in real time in a default display 0. The WMS of the mobile phone may output display content in the display 0 to a display of the mobile phone in real time, so that the mobile phone displays the display interface 1301 through the display.

In addition, after the mobile phone establishes the connection to the PC, the WMS of the mobile phone may further output the display content in the display 0 to the PC in real time. For example, the WMS of the mobile phone may encode the display content in the display 0 in a form of a video stream, and then send the encoded display content to the PC. After receiving the display content, the PC may decode the display content to obtain decoded display content in the display 0. Further, the PC may create a first window 1302, and display the display content (namely, the display interface 1301) in the display 0 in the first window 1302. In addition to the display interface 1301, the first window 1302 may further include a component such as a control bar, a status bar, or a toolbar. That is, the PC may display, in a form of a window, the display interface that is of the application and that is projected from the mobile phone.

It should be noted that specific content of the display interface 1301 on the mobile phone and the display interface 1301 displayed by the PC in the first window 1302 may be the same, but display parameters such as a shape, a size, a location, an arrangement, a resolution, or a DPI (Dots Per Inch, dots per inch) of the display interface 1301 and the display interface 1301 displayed by the PC in the first window 1302 may be different. This is not limited in embodiments of this application.

After the mobile phone projects the display interface 1301 of the running home screen onto the first window 1302 on the PC for display, the display content on the mobile phone is synchronized with the display content in the first window 1302 on the PC. If the mobile phone detects that the user inputs an operation (for example, tapping an application icon or opening a control center) into the display interface 1301, the mobile phone may update, in response to the operation, the display content in the display 0 according to the foregoing method, to synchronously update the display content on the mobile phone and the first window 1302 on the PC.

S 1203 : The mobile phone projects a second display interface of a second application onto a second window on the PC for display, and the mobile phone continues to synchronously display the first display interface in the first window.

In some embodiments, the mobile phone may project a plurality of applications on the mobile phone onto the PC in a form of a plurality of windows for display, so that the user can simultaneously enjoy, on the PC, services provided by the plurality of applications on the mobile phone.

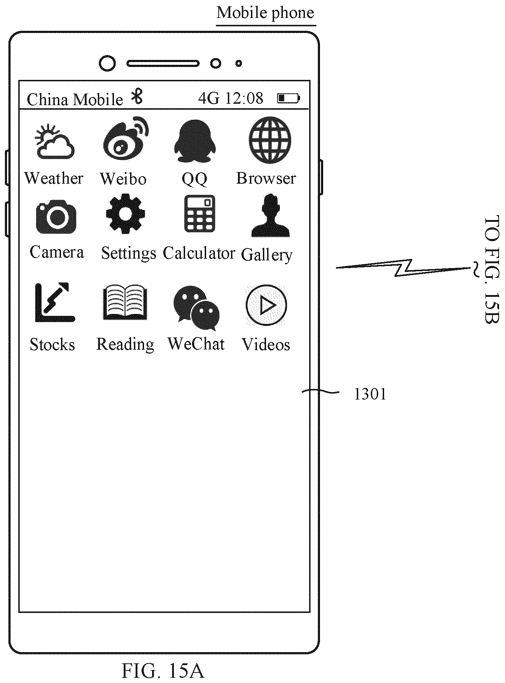

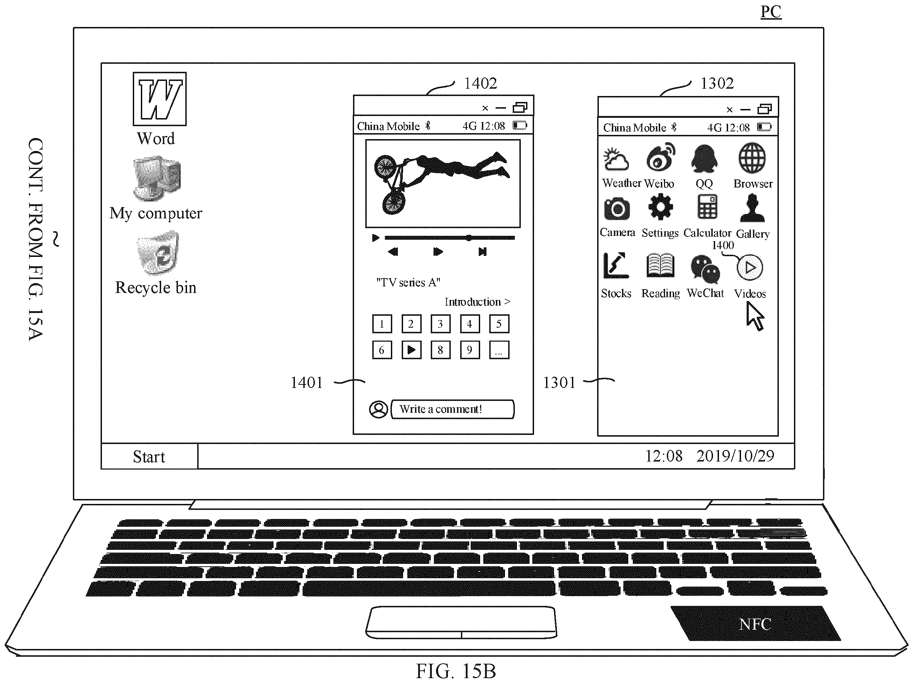

An example in which the mobile phone projects the display interface 1301 of the home screen onto the first window 1302 on the PC for display is still used. If the user wants to open, on the PC, a video app on the mobile phone, the user may input an operation of opening the video app into the first window 1302 on the PC. For example, as shown in FIG. 15A and FIG. 15B, if it is detected that the user double-clicks an icon 1400 of the video app in the first window 1302 through the mouse of the PC, the PC may add corresponding operation information to a projection instruction 1 and send the projection instruction 1 to the mobile phone. The projection instruction 1 is used to indicate the mobile phone to project the video app onto the PC for display. For example, the operation information may include an identifier of the video app, or the operation information may include location coordinates when the mouse double-clicks. After receiving the projection instruction 1, the mobile phone may determine, based on the identifier of the video app or the location coordinates when the mouse double-clicks in the projection instruction 1, that a display interface of the video app needs to be sent to the PC for display.

Further, still as shown in FIG. 15A and FIG. 15B, the mobile phone may start to run the video app in a background. In this case, the WMS of the mobile phone not only needs to draw the display interface 1301 of the home screen running in a foreground in real time, but also needs to draw the display interface 1401 of the video app running in the background in real time. For example, the WMS of the mobile phone may divide the display 0 into different areas. The different areas correspond to application stacks of different applications, that is, the different areas correspond to task IDs of the different applications. For example, the WMS of the mobile phone may draw the display interface 1301 of the home screen in an area 1 of the display 0, and draw the display interface 1401 of the video app in an area 2 of the display 0. A task ID of the home screen may be a first task ID, and a task ID of the video app may be a second task ID. Further, after the WMS of the mobile phone outputs the display content in the display 0 to the PC in real time, if the PC extracts two display interfaces in the area 1 and the area 2, the PC may display the display interface 1301 in the area 1 in the first window 1302, and the PC may create a second window 1402 for display content (that is, the display interface 1401 of the video app) in the area 2, and display the display interface 1401 in the area 2 in the second window 1402. In this way, the home screen and the video app on the mobile phone may be projected onto the PC for display by using two windows.

In the foregoing implementation, the WMS of the mobile phone records correspondences between different applications, different areas in the display 0, and different windows on the PC. For example, there is a correspondence between the first task ID of the home screen, the area 1 in the display 0, and the first window 1302 on the PC. For another example, there is a correspondence between the second task ID of the video app, the area 2 in the display 0, and the second window 1402 on the PC.

In some other embodiments, after the mobile phone determines that the display interface of the video app needs to be sent to the PC for display, the WMS of the mobile phone may create a new display module, for example, a display 1. Further, the WMS of the mobile phone may continue to draw the display interface 1301 of the home screen in the display 0, and the WMS of the mobile phone may draw the display interface 1401 of the video app in the display 1. Subsequently, the WMS of the mobile phone may output display content in the display 0 and the display 1 to the PC in real time. After receiving the display content (namely, the display interface 1301) in the display 0, the PC may update the display content in the display 0 in the first window 1302. After receiving the display content (namely, the display interface 1401) in the display 1, the PC may create a second window 1402 corresponding to the display 1, and update the display content in the display 1 in the second window 1402. In this way, still as shown in FIG. 15A and FIG. 15B, the home screen and the video app on the mobile phone may be projected onto the PC for display by using two windows.

In the foregoing implementation, the WMS of the mobile phone records correspondences between different applications, different display modules, and different windows on the PC. For example, there is a correspondence between the first task ID of the home screen, the display 0, and the first window 1302 on the PC. For another example, there is a correspondence between the second task ID of the video app, the display 1, and the second window 1402 on the PC.

Subsequently, if the PC detects that the user inputs an operation (for example, a return operation or a pause operation) into the display interface 1401 in the second window 1402, the PC may add an identifier of the second window 1402 and corresponding operation information to a projection instruction 2 and send the projection instruction 2 to the mobile phone. After receiving the projection instruction 2, the mobile phone may update, based on the foregoing correspondence, the display content in the display 1 (or the area 2 in the display 0) corresponding to the second window 1402 in response to the operation input by the user, to synchronously update the display content in the second window 1402 on the PC.

In some other embodiments, in addition to triggering, by operating the first window 1302 on the PC, the PC to display a plurality of applications on the mobile phone by using a plurality of windows, the user may further input a preset gesture into the mobile phone and trigger the mobile phone to project a plurality of applications onto the PC in a form of a plurality of windows for display. For example, still using the display interface 1301 of the home screen displayed on the mobile phone as an example, if it is detected that the user drags an icon of a WeChat app to a preset area of the display interface 1301, or drags the icon of the WeChat app out of a boundary of the display interface 1301, the mobile phone may run the WeChat app in the background based on the foregoing method, and send a drawn display interface of the WeChat app to the PC, and the PC creates a corresponding window to display a display interface of the WeChat app.

In addition, in the foregoing embodiment, an example in which the PC separately displays display interfaces of two applications on the mobile phone by using two windows is used for description. It may be understood that if the user wants to project more applications (for example, three applications or four applications) on the mobile phone onto the PC for display, the mobile phone and the PC may continue to project a plurality of applications on the mobile phone onto the PC in a form of a plurality of windows according to the foregoing method. This is not limited in embodiments of this application.

S 1204: The mobile phone detects a call event reported by the call app.

When the mobile phone projects a plurality of applications onto the PC in a form of a plurality of windows for display, a display interface on the mobile phone and a display interface in one window on the PC may be synchronized. Still as shown in FIG. 15A and FIG. 15B, the display content in the first window 1302 on the PC is synchronized with the display content on the mobile phone. For example, the display interface 1301 of the home screen is displayed in both the first window 1302 and the mobile phone.

In this scenario, the mobile phone may detect the call event reported by the call app. For example, the call event may be an event in which the user answers a call of a contact. For another example, the call event may be an event in which the user makes a call to a contact. After detecting the call event, the call app of the mobile phone may report the call event to a phone manager (Phone Manager) of the mobile phone. In this case, on one hand, the phone manager of the mobile phone may transfer the call event to the WMS of the mobile phone, and trigger the mobile phone to continue to perform the following step S1205. On the other hand, the phone manager of the mobile phone may invoke the optical proximity sensor to perform the following step S 1206.

S1205: In response to the call event, display a third display interface of the call app in the first window on the PC and on the mobile phone.

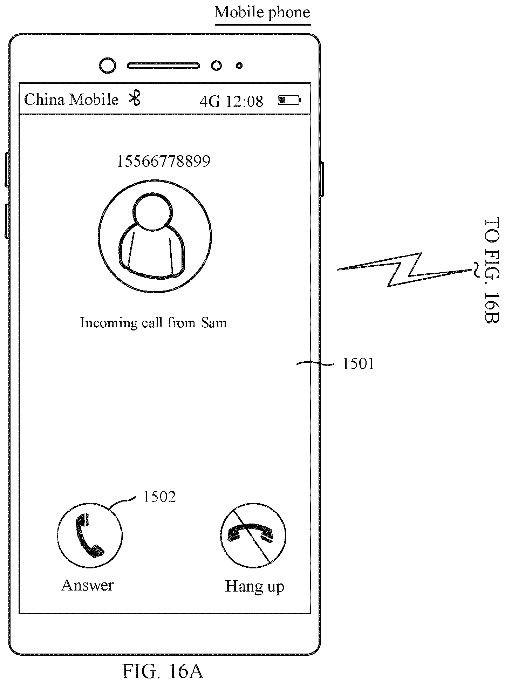

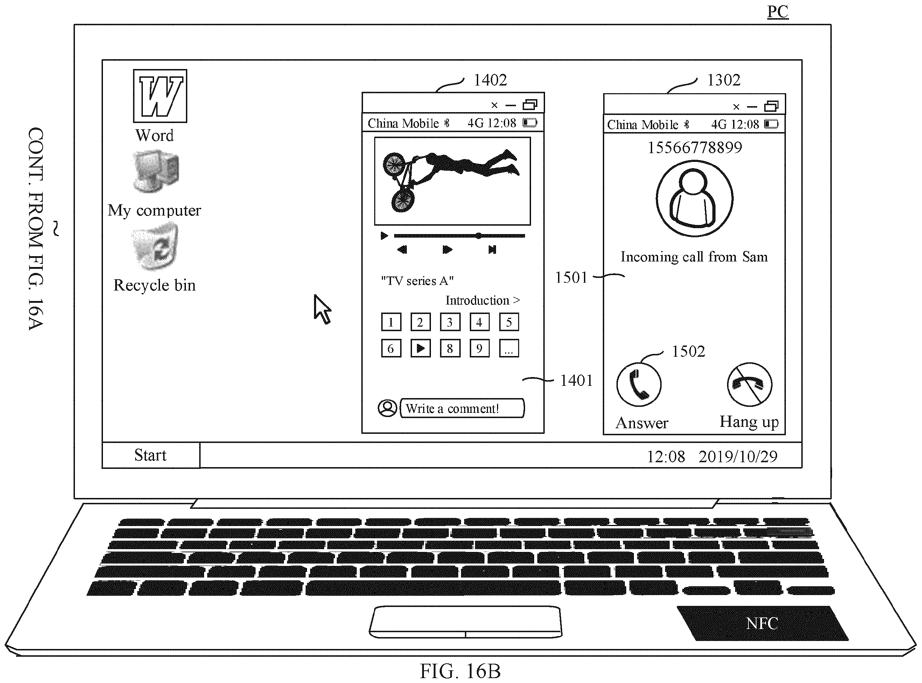

For example, the call event detected by the mobile phone is an event in which the user answers a call of a contact. As shown in FIG. 16A and FIG. 16B, if the mobile phone receives an incoming call from a contact Sam when displaying the display interface 1301 of the home screen, the mobile phone may switch an application running in the foreground from the home screen to the call app. In this case, the WMS of the mobile phone may draw a display interface 1501 of the call app in an area (for example, the area 1) that is in the display 0 and in which the display interface 1301 is originally drawn. In addition, the WMS of the mobile phone may continue to draw the display interface 1401 of the video app in the related display module based on the related method in step S1503.

Further, as shown in FIG. 16A and FIG. 16B, after obtaining the display interface 1501 of the call app from the display 0, the display of the mobile phone may display the display interface 1501. After obtaining the display interface 1501 of the call app from the display 0, the PC may display the display interface 1501 of the call app in the first window 1302 that originally displays the display interface 1301. That is, in this case, the first window 1302 corresponds to the display interface 1501 of the call app. In addition, the PC may obtain the display interface 1401 of the video app from the related display module, and continue to display the display interface 1401 in the second window 1402.

That is, the first window 1302 on the PC may dynamically display the display interface on the mobile phone, and the second window 1402 on the PC may continue to display the display interface of the application to which projection is performed.

Subsequently, if it is detected that the user taps an answer button 1502 on the display interface 1501 on the mobile phone, the call app may generate the current call event, and report the call event to the WMS of the mobile phone by using the phone manager. In this case, the WMS of the mobile phone may continue to project, based on the foregoing method, the display interface displayed in real time by the mobile phone onto the first window 1302 on the PC, and project the display interface of the projected video app onto the second window 1402 on the PC.

S1206: The mobile phone detects whether there is an object near an earpiece of the mobile phone.

In step S 1206, if it is detected that the user taps the answer button 1502 on the display interface 1501 on the mobile phone, the call app reports the current call event to the phone manager, and then the phone manager may further invoke the optical proximity sensor disposed near the earpiece of the mobile phone to detect whether an object is approaching the earpiece of the mobile phone. Certainly, before detecting the call event, the mobile phone may also invoke the optical proximity sensor to detect whether an object approaches the earpiece of the mobile phone. This is not limited in embodiments of this application.

For example, the optical proximity sensor may be specifically a sensor that can detect a distance, such as a Hall effect sensor or a photoelectric sensor. The optical proximity sensor may be disposed near the earpiece of the mobile phone. The mobile phone can invoke a Sensor.TYPE_PROXIMITY interface to invoke the optical proximity sensor to detect a distance between the mobile phone and an obstacle. When it is detected that the distance between the mobile phone and the obstacle is less than a preset value (for example, 5 cm), it indicates that the user already approaches the earpiece of the mobile phone and is answering the current call by using the earpiece of the mobile phone. In this case, the mobile phone may continue to perform the following step S1207, so that when the PC stops displaying the display interface on which the call event is displayed, the PC can normally display a display interface of an application that is unrelated to the current call event and that is in the projection scenario.

Correspondingly, if the distance between the mobile phone and the obstacle is greater than or equal to the preset value, it indicates that the user currently does not use the earpiece of the mobile phone to answer the current call. In this case, the mobile phone may continue to display the display interface of the call app. In addition, the mobile phone may continue to project the display interface of the call app onto the first window 1302 on the PC for display based on the foregoing method.

S 1207: If it is detected that there is an object near the earpiece of the mobile phone, the mobile phone enters a screen-off state, and indicates the PC to stop displaying the display interface of the call app in the first window.

In step S 1207, after the mobile phone detects that an object approaches the earpiece of the mobile phone, the WMS of the mobile phone may stop drawing the display interface of the call app in the area 1 of the display 0, to avoid a mistouch when the user answers the call and avoid leakage of user privacy on the display interface during the call.

For example, the WMS of the mobile phone may first query a specific display module or a specific area in the display module corresponding to the current call app. For example, because the correspondence between the call app, the area 1 in the display 0, and the first window 1302 on the PC is established in the WMS, after the WMS of the mobile phone obtains the current call event, the WMS of the mobile phone may determine, based on the correspondence, that the display interface of the call app is being drawn in the area 1 of the display 0. Further, the WMS of the mobile phone may call a stop render() function to stop drawing in the area 1 of display 0. For example, if the mobile phone detects that an object approaches the earpiece of the mobile phone when drawing the call interface of the call app in the area 1 of the display 0, the mobile phone may stop drawing the call interface. For another example, during a call, the mobile phone may display a display interface of another application, that is, the mobile phone draws the display interface of another application in the area 1 of the display 0. In this case, if it is detected that an object approaches the earpiece of the mobile phone, the mobile phone may also stop drawing the display interface in the area 1.

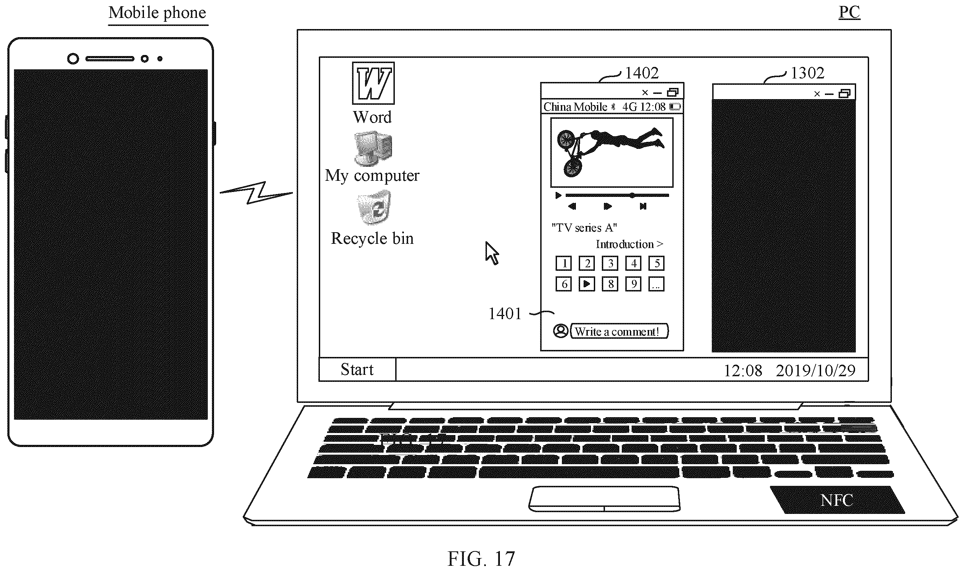

Further, as shown in FIG. 17, after the display of the mobile phone cannot obtain the display content from the area 1 of the display 0, the display of the mobile phone may enter a screen-off (or black-screen) state. In addition, the mobile phone may send a notification event to the PC, to indicate the PC to stop displaying the display interface in the first window 1302. After the PC receives the foregoing notification event, because the PC cannot obtain the display content from the area 1 of the display 0, the PC may enable the first window 1302 to enter the black-screen state synchronously with the mobile phone. In this way, the PC does not display, in the first window 1302, related information of the display interface during the call, thereby avoiding leakage of the user privacy. The PC may normally display the control bar in the first window 1302, or may stop displaying the control bar in the first window 1302. This is not limited in embodiments of this application.

In addition, still as shown in FIG. 17, the WMS of the mobile phone may continue to draw the display interface 1401 of the video app in the area 2 of the display 0 (or the display 1). Further, after obtaining the display interface 1401 of the video app from the area 2 of the display 0 (or the display 1), the PC may continue to display the display interface 1401 of the video app in the corresponding second window 1402.

In this way, in the multi-application projection scenario, after the mobile phone (that is, the source end device) detects the call event, the mobile phone may not display on the mobile phone and in a window (for example, the first window 1302) related to the call event on the PC (that is, the target device), to avoid a mistouch and privacy leakage during the call. However, the mobile phone may continue to normally display, on the PC, a window unrelated to the call event, so that the current call event does not interfere with the user's use of another application that is already projected onto the PC, to improve user experience in the projection and call scenarios.

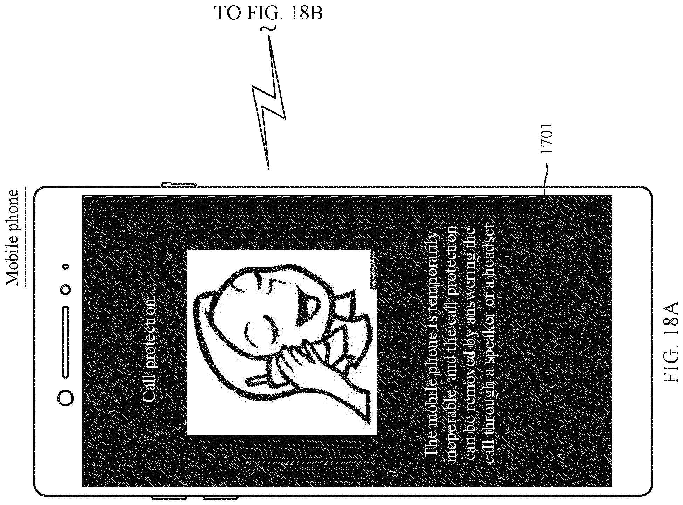

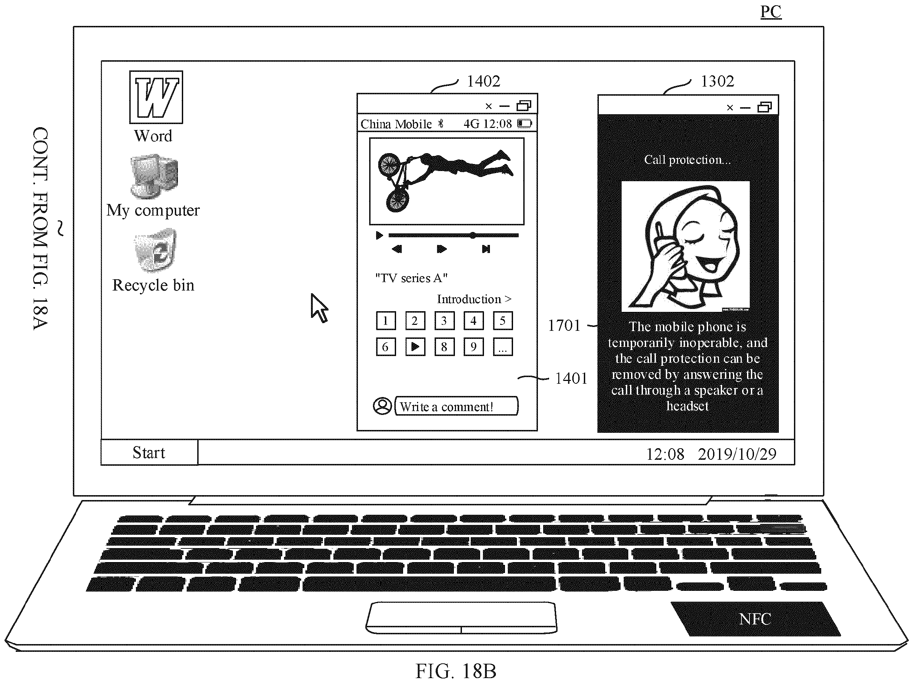

In some other embodiments, after detecting that an object approaches the earpiece of the mobile phone, the WMS of the mobile phone may continue to send display interfaces in the area 1 and the area 2 of the display 0 to the PC in real time. In addition, the mobile phone may send a notification event to the PC, where the notification event may include an identifier of the first window 1302, to indicate the PC to stop displaying the display interface in the first window 1302. After receiving the notification event, as shown in FIG. 18A and FIG. 18B, the PC may display a preset blocking picture 1701 in the first window 1302 based on the identifier of the first window 1302 in the notification event. The blocking picture 1701 may be used to block all or a part of an interface that is being displayed in the first window 1302. The identifier of the first window 1302 may be a task ID of the call app that is running in the first window 1302.

For example, after obtaining the corresponding display content (for example, the call interface) in real time from the area 1 of the display 0, the PC may display the call interface in the first window 1302. After obtaining the notification event, the PC may draw the blocking picture 1701 at an upper layer of the call interface based on the identifier of the first window 1302 in the notification event. In this way, the blocking picture 1701 may block the display interface of the lower-layer call app, to avoid a mistouch and privacy leakage during the call. In addition, the blocking picture 1701 may further include prompt information such as a text, a picture, or an animation, used to prompt that the user is currently having a call. In this case, the mobile phone may still continue to draw the display interface 1401 of the video app in the area 2 of the display 0 (or the display 1), and project the display interface 1401 of the video app onto the second window 1402 on the PC for display.

S1208: In response to an operation input by the user into the second window, the PC updates the display interface in the second window.

As shown in FIG. 17 or FIG. 18A and FIG. 18B, after the mobile phone detects the call event, although the mobile phone cannot display the related interface of the call app in the first window 1302 on the PC for the user to operate, the video app originally projected by the mobile phone in the second window 1401 on the PC is not affected.

In this scenario, the user may normally perform a related operation on the display interface 1401 of the video app in the second window 1401 on the PC. For example, if the PC detects that the user inputs an operation (for example, a return operation or a pause operation) into the display interface 1401 in the second window 1402, the PC may add the identifier of the second window 1402 and received specific operation information to a projection instruction 3 and send the projection instruction 3 to the mobile phone. After receiving the projection instruction 3, the mobile phone may update the display content in the display 1 (or the area 2 in the display 0) corresponding to the second window 1402 in response to the operation input by the user, to synchronously update the display content in the second window 1402 on the PC.

S1209: When the call event ends, or it is detected that there is no object near the earpiece of the mobile phone, the mobile phone and the first window on the PC synchronously display a fourth display interface.

In the foregoing step S1206, after obtaining the call event, the mobile phone may continuously detect whether an object approaches the earpiece of the mobile phone. If it is detected in the call process that an object approaches the earpiece of the mobile phone for a period of time and then moves away from the earpiece of the mobile phone, it indicates that the user moves away from the earpiece of the mobile phone during the call process, and the user may need to operate the screen of the mobile phone subsequently. Alternatively, if a call end event reported by the call app is detected after it is detected that the call app reports the call event for a period of time, it indicates that the user already ends the current call, and the user may need to operate the screen of the mobile phone subsequently.

In this case, in step S1209, if it is detected that the current call event ends, or it is detected that there is no object near the earpiece of the mobile phone, the mobile phone may recover the display interface displayed before the current call event. The first window 1302 on the PC may also recover, synchronously with the mobile phone, the display interface displayed before the current call event (that is, the fourth display interface, where the fourth display interface and the first display interface may be the same or different).

For example, after the current call event ends, the AMS of the mobile phone may run the home screen again in the foreground, and further, the WMS of the mobile phone may draw the display interface 1301 of the home screen again in the area 1 of the display 0. In this way, as shown in FIG. 15A and FIG. 15B, after obtaining the display content in the area 1 of the display 0, the display of the mobile phone may display the display interface 1301 of the home screen again on the screen of the mobile phone. After obtaining the display content in the area 1 of the display 0, the PC may display the display interface 1301 of the home screen again in the first window 1302.

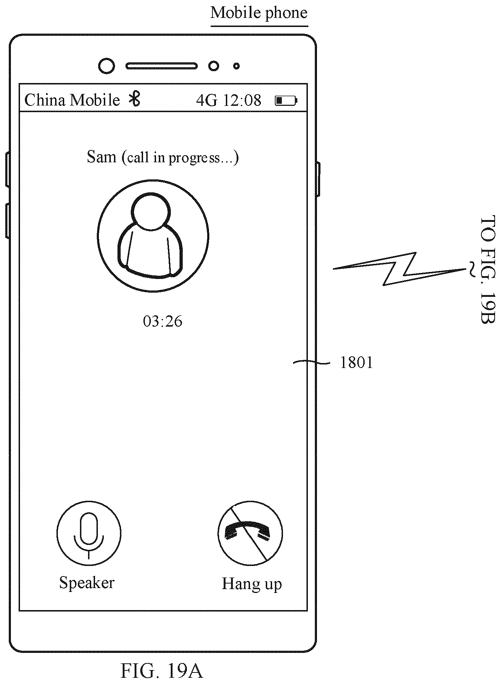

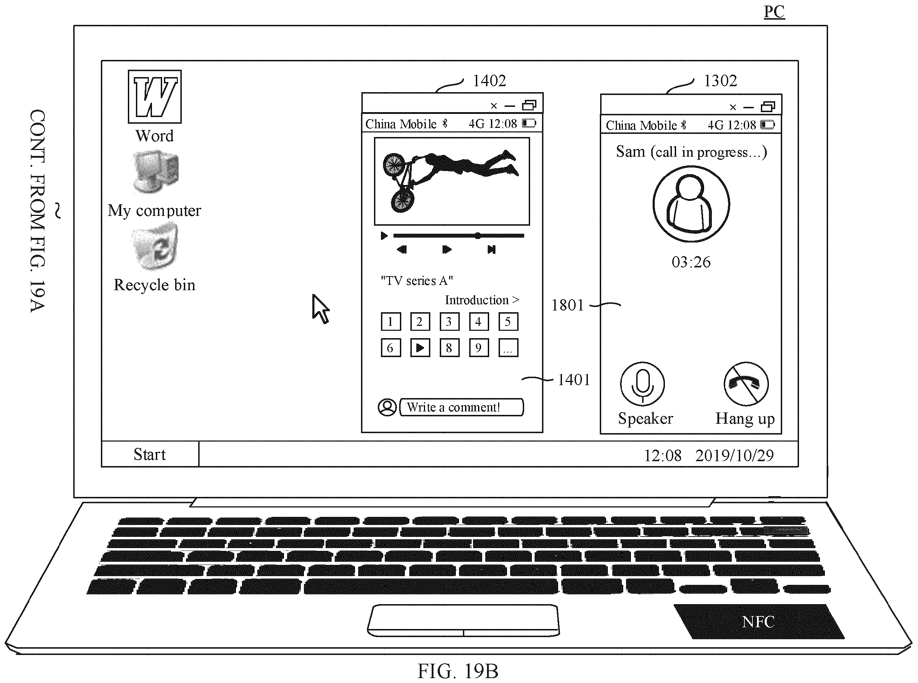

For another example, after detecting that there is no object near the earpiece of the mobile phone in the call process, the AMS of the mobile phone may continue to run the call app in the foreground. Further, the WMS of the mobile phone may re-draw a call interface 1801 of the call app in the area 1 of the display 0. In this way, as shown in FIG. 19A and FIG. 19B, after obtaining the display content in the area 1 of the display 0, the display of the mobile phone may display the call interface 1801 of the call app on the screen of the mobile phone. After obtaining the display content in the area 1 of the display 0, the PC may display the call interface 1801 of the call app in the first window 1302.

For another example, when the current call event ends, or it is detected that there is no object near the earpiece of the mobile phone, the mobile phone may further send a recovery event to the PC. Similar to the foregoing notification event, the recovery event may include the identifier of the first window 1302. Further, in response to the recovery event, the PC may remove the blocking picture 1701 displayed in the first window 1302, to recover, in the first window 1302, the display interface displayed before the current call event.

When drawing the display interface 1301 (or the call interface) in the area 1 of the display 0, the WMS of the mobile phone may further continue to draw the display interface 1401 of the video app in the area 2 of the display 0 (or the display 1). Further, after obtaining the display content in the area 2 of the display 0 (or the display 1), the PC may display the display interface 1401 of the home screen in the second window 1402.

In this way, in the multi-application projection scenario, after the current call event ends or it is detected that there is no object near the earpiece of the mobile phone, the mobile phone (that is, the source end device) may recover display content on the mobile phone and in a window related to the call event on the PC (that is, the target device), so that the user can continue to use, on the PC, a plurality of applications projected from the mobile phone onto the PC.

In addition, in the foregoing embodiment, the mobile phone is used as the source end device in the projection scenario and the PC is used as the target device in the projection scenario for description. It may be understood that, in the projection scenario, the source end device to which embodiments of this application are applied may alternatively be an electronic device with a call function, such as a tablet computer or a watch, and the target device may alternatively be an electronic device with a display function, such as a television or a tablet computer. This is not limited in embodiments of this application.

It should be noted that, in the foregoing embodiment, a specific method for implementing a distributed photographing function between function modules is described by using an Android system as an example. It may be understood that a corresponding function module may also be disposed in another operating system (for example, a HarmonyOS) to implement the foregoing method. All devices and function modules with functions similar to those in embodiments of this application fall within the scope of the claims of this application and equivalent technologies of this application.

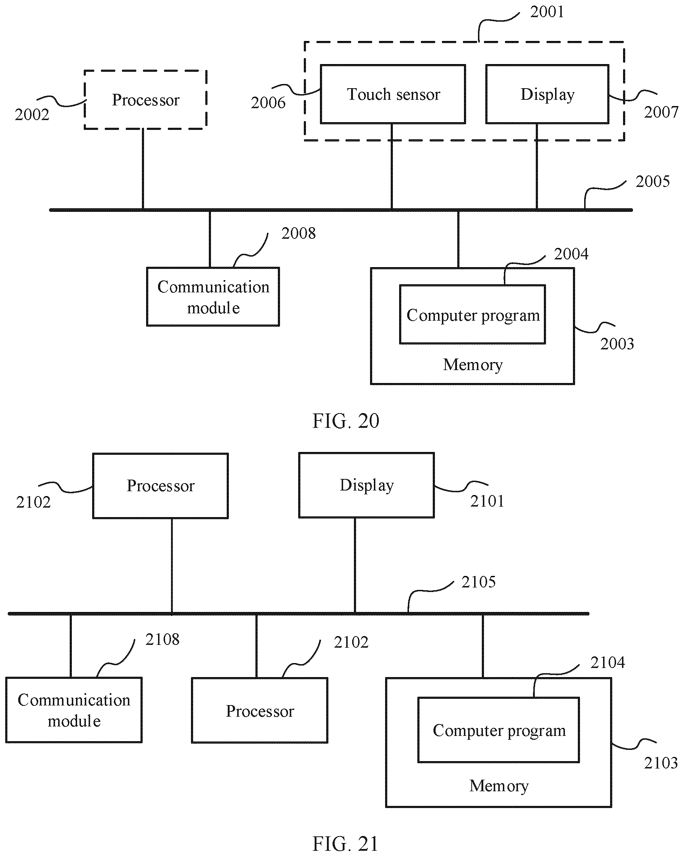

As shown in FIG. 20, an embodiment of this application discloses an electronic device. The electronic device may be the foregoing source end device (for example, a mobile phone). The electronic device may specifically include: a touchscreen 2001, where the touchscreen 2001 includes a touch sensor 2006 and a display 2007; one or more processors 2002; a memory 2003; a communication module 2008; one or more applications (not shown); and one or more computer programs 2004. The foregoing components may be connected through one or more communication buses 2005. The one or more computer programs 2004 are stored in the memory 2003 and are configured to be executed by the one or more processors 2002. The one or more computer programs 2004 include instructions. The instructions may be used to perform the related steps performed by the source end device in the foregoing embodiments.

As shown in FIG. 21, an embodiment of this application discloses an electronic device. The electronic device may be the foregoing target device (for example, a PC). The electronic device may specifically include: a display 2101; one or more processors 2102; a memory 2103; a communication module 2108; one or more applications (not shown); and one or more computer programs 2104. The foregoing components may be connected through one or more communication buses 2105. The one or more computer programs 2104 are stored in the memory 2103 and are configured to be executed by the one or more processors 2102. The one or more computer programs 2104 include instructions. The instructions may be used to perform the related steps performed by the target device in the foregoing embodiments.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communications connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A projection display method, comprising:
projecting, by a source end device, a first display interface of a first application onto a first window of a target device for display, and synchronously displaying, by the source end device, display content in the first window;
projecting, by the source end device, a second display interface of a second application onto a second window of the target device for display, and continuing, by the source end device, to synchronously display the display content in the first window;
detecting, by the source end device after detecting a call event, whether an object approaches the source end device; and
if an object approaches the source end device, stopping, by the source end device, displaying a call interface corresponding to the call event, and triggering the target device to display a preset blocking picture in the first window, wherein the blocking picture is used to block a part or all of the call interface.

2. The method according to claim 1, wherein the triggering, by the source end device, the target device to display a preset blocking picture in the first window comprises:
sending, by the source end device, a notification event to the target device, wherein the notification event comprises an identifier of the first window; and triggering the target device to draw the blocking picture at an upper layer of the call interface in the first window in response to the notification event.

3. The method according to claim 1, wherein if an object approaches the source end device, the method further comprises:
continuing, by the source end device, to send the second display interface to the target device, and triggering the target device to continue to display the second display interface in the second window.

4. The method according to claim 1, wherein the projecting, by a source end device, a first display interface of a first application onto a first window of a target device for display comprises:
drawing, by the source end device, the first display interface of the first application on a first virtual screen; and
outputting, by the source end device, the first display interface on the first virtual screen to the target device and a display of the source end device; and
the projecting, by the source end device, a second display interface of a second application onto a second window of the target device for display comprises:
drawing, by the source end device, the second display interface of the second application on a second virtual screen; and
outputting, by the source end device, the second display interface on the second virtual screen to the target device.

5. The method according to claim 1, wherein the projecting, by a source end device, a first display interface of a first application onto a first window of a target device for display comprises:
drawing, by the source end device, the first display interface of the first application in a first area of a first virtual screen; and
outputting, by the source end device, the first display interface in the first area to the target device and a display of the source end device; and
the projecting, by the source end device, a second display interface of a second application onto a second window of the target device for display comprises:
drawing, by the source end device, the second display interface of the second application in a second area of the first virtual screen; and
outputting, by the source end device, the second display interface in the second area to the target device.

6. The method according to any one of claims 1 to 5, wherein the blocking picture comprises prompt information, and the prompt information is used to prompt that a user is on a call.

7. The method according to any one of claims 1 to 6, wherein after the triggering, by the source end device, the target device to display a preset blocking picture in the first window, the method further comprises:
in response to an operation input by the user into the second window, receiving, by the source end device, operation information sent by the target device;
updating, by the source end device, the second display interface to a third display interface based on the operation information; and
sending, by the source end device, the third display interface to the target device, and triggering the target device to display the third display interface in the second window.

8. The method according to any one of claims 1 to 7, wherein after the triggering, by the source end device, the target device to display a preset blocking picture in the first window, the method further comprises:
after the source end device detects that the call event ends or no object approaches the source end device, synchronously displaying, by the source end device, a fourth display interface with the first window of the target device, wherein the fourth display interface is the same as or different from the first display interface.

9. The method according to any one of claims 1 to 8, wherein the detecting, by the source end device after detecting a call event, whether an object approaches the source end device comprises:
detecting, by the source end device after detecting the call event, a distance between an obstacle and the source end device by using an optical proximity sensor; and
when the distance between the obstacle and the source end device is less than a preset value, determining, by the source end device, that an object approaches the source end device; or
when the distance between the obstacle and the source end device is greater than or equal to a preset value, determining, by the source end device, that no object approaches the source end device.

10. The method according to any one of claims 1 to 9, wherein the call event comprises an event of answering a call of a contact or an event of making a call to a contact.

11. A projection display method, comprising:
displaying, by a source end device, a first display interface of a first application, and sending the first display interface to a target device;
receiving, by the target device, the first display interface, and displaying the first display interface in a first window;
sending, by the source end device when displaying the first display interface, a second display interface of a second application to the target device;
receiving, by the target device, the second display interface, and displaying the second display interface in a second window;
detecting, by the source end device after detecting a call event, whether an object approaches the source end device;
if an object approaches the source end device, stopping, by the source end device, displaying a call interface corresponding to the call event, and sending, by the source end device, a notification event to the target device, wherein the notification event comprises an identifier of the first window; and
in response to the notification event, displaying, by the target device, a preset blocking picture in the first window, wherein the blocking picture is used to block a part or all of the call interface.

12. The method according to claim 11, wherein after the receiving, by the target device, the second display interface, and displaying the second display interface in a second window, the method further comprises:
receiving, by the target device, a first operation input by a user into the second window;
sending, by the target device to the source end device, first operation information corresponding to the first operation;
updating, by the source end device, the second display interface to a third display interface based on the first operation information, and sending the third display interface to the target device; and
displaying, by the target device, the third display interface in the second window.

13. The method according to claim 11 or 12, wherein after the receiving, by the target device, the first display interface, and displaying the first display interface in a first window, the method further comprises:
receiving, by the target device, a second operation input by the user into the first window; and
sending, by the target device to the source end device, second operation information corresponding to the second operation; and
the sending, by the source end device when displaying the first display interface, a second display interface of a second application to the target device comprises:
running, by the source end device when displaying the first display interface, the second application in a background based on the second operation information; and
sending, by the source end device to the target device, the second display interface obtained when the second application is run.

14. The method according to any one of claims 11 to 13, wherein after the displaying, by the target device, a preset blocking picture in the first window, the method further comprises:
after the source end device detects that the call event ends or no object approaches the source end device, displaying, by the source end device, a fourth display interface;
sending, by the source end device, the fourth display interface and a recovery event to the target device, wherein the recovery event comprises the identifier of the first window; and
in response to the recovery event, stopping, by the target device, displaying the blocking picture in the first window, and displaying the fourth display interface.

15. The method according to any one of claims 11 to 14, wherein when the source end device stops displaying the call interface corresponding to the call event, the source end device enters a screen-off state.

16. An electronic device, wherein the electronic device is a source end device, and the source end device comprises:
a display;
one or more processors;
a memory; and
a communication module, wherein
the memory stores one or more computer programs, the one or more computer programs comprise instructions, and when the instructions are executed by the source end device, the source end device is enabled to perform the projection display method performed by the source end device according to any one of claims 1 to 10.

17. An electronic device, wherein the electronic device is a target device, and the target device comprises:
a display;
one or more processors;
a memory; and
a communication module, wherein
the memory stores one or more computer programs, the one or more computer programs comprise instructions, and when the instructions are executed by the target device, the target device is enabled to perform the projection display method performed by the target device according to any one of claims 11 to 15.

18. A projection display system, wherein the system comprises the electronic device according to claim 16 and the electronic device according to claim 17.

19. A computer-readable storage medium, wherein the computer-readable storage medium stores instructions, and when the instructions are run on an electronic device, the electronic device is enabled to perform the projection display method according to any one of claims 1 to 10 or 11 to 15.

20. A computer program product comprising instructions, wherein when the computer program product runs on an electronic device, the electronic device is enabled to perform the projection display method according to any one of claims 1 to 10 or 11 to 15.
